# EUROPEAN PATENT SPECIFICATION

(11) **EP 3 882 116 B1**
(45) Date of publication and mention of the grant of the patent: **19.04.2023**
(21) Application number: 19884906.9
(22) Date of filing: 11.11.2019
(51) Int. Cl.: B62K 25/20, B62K 11/10

(54) **Straddled vehicle**
Spreiz-Sitz-Fahrzeug
Véhicule à selle

(30) Priority: 12.11.2018 JP 2018212476
(43) Date of publication of application: 22.09.2021
(73) Proprietor: Yamaha Hatsudoki Kabushiki Kaisha, Iwata-shi, Shizuoka 438-8501 (JP)
(72) Inventor: SAITO, Yusuke, Iwata-shi, Shizuoka 438-8501 (JP)
(74) Representative: Grünecker Patent- und Rechtsanwälte PartG mbB
(86) International application number: PCT/JP2019/044205
(87) International publication number: WO 2020/100839

(56) References cited:
- EP-A1- 0 726 197
- JP-A- H08 207 864
- JP-A- 2007 326 507
- JP-U- S59 117 589

## Description

The present invention relates to a straddled vehicle.

Patent Literature 1 discloses a scooter as an example of a straddled vehicle. This scooter includes a swing unit vertically swingable with respect to the body frame. The swing unit includes an engine and a transmission mechanism. A transmission mechanism includes a transmission case that houses a power transmission mechanism.

The transmission case of the transmission mechanism is arranged on the left side of a rear wheel. A swing arm and a rear suspension are arranged on the right side of the rear wheel. The front end portion of the swing arm is fixed to the transmission case. The upper end portion of the rear suspension is attached to the rear end portion of the body frame. The lower end portion of the rear suspension is attached to a bracket portion provided in the upper portion of the rear end portion of the swing arm. As shown in FIG. 3 of Patent Literature 1, the inner end of the bracket portion is arranged further outward than the outer end of the front end portion of the swing arm in the vehicle width direction.

The prior art document EP 0 726 197 A1 discloses a straddled vehicle with a rear wheel and a seat configured for a rider to sit. An oil tank and a fuel tank are arranged under the seat. A swing unit includes an engine and a transmission mechanism at least partially arranged further to the left than the rear wheel and arranged to transmit power of the engine to the rear wheel. The swing unit is vertically swingable with respect to the body frame of the vehicle and is supporting the rear wheel. A rear arm includes a front portion fixed to the engine and a rear portion supporting the rear wheel together with the transmission mechanism. The rear arm is arranged further to the right than the rear wheel and vertically swingable together with the rear wheel and the swing unit with respect to the body frame. The swing is formed in a ladder-like shape by arranging a plurality of openings along the longitudinal direction of the vehicular body to ensure a high rigidity of the swing arm while reducing the weight thereof. A pair of right and left rear suspensions is provided. The right rear suspension is arranged further to the right than the rear wheel and attached to the body frame and the rear arm. The left rear suspension is arranged further to the left than the rear wheel and attached to the body frame and the swing unit. The rear ends of the right and left rear suspensions are arranged further to the front than a rotation center of the rear wheel. The rear arm includes fixed portions fixed to the engine, and a suspension attached portion to which the right rear suspension is attached. At least a portion of the suspension attached portion is arranged further outward than the at least one fixed portion in the vehicle width direction.

### Citation List

### Patent Literature

Patent Literature 1 : JP 4247860 B2

A general scooter includes a storage box that is opened and closed by a seat. However, in the scooter disclosed in Patent Literature 1, since the entire rear suspension is arranged further to the rear than the rotation center of the rear wheel, the shape and/or size of the rear portion of the scooter including the storage box is limited by the rear suspension.

Further, in the scooter disclosed in Patent Literature 1, the upper end portion of the rear suspension is attached to the rear end portion of the body frame. The rear end portion of the body frame is arranged further to the rear than the rotation center of the rear wheel. Thus, the shape and/or size of the storage box is limited not only by the rear suspension but also by the body frame. In addition, peripheral parts arranged at the rear portion of the scooter such as the rear suspension and a CVT case are also subject to these restrictions.

On the other hand, in a case in which the scooter includes two rear suspensions, normally, the two rear suspensions are arranged symmetrically with respect to a center of the scooter in the vehicle width direction (hereinafter, a vehicle center). In a case in which the scooter includes only one rear suspension, normally, the rear suspension is arranged at a position close to the vehicle center.

The scooter disclosed in Patent Literature 1 includes only one rear suspension. The lower end portion of the rear suspension disclosed in Patent Literature 1 is attached to the upper portion of the rear arm arranged between the rear wheel and the silencer in the vehicle width direction and is arranged at a position close to the rear wheel in the vehicle width direction. Thus, the rear suspension disclosed in Patent Literature 1 is arranged at a position close to the vehicle center. However, when the rear suspension approaches the vehicle center, the width of the rear portion of the scooter including the storage box is further limited.

In addition, the rear suspension disclosed in Patent Literature 1 is arranged on the right side of the rear wheel. Thus, as compared to a case in which the rear suspension is arranged on the left side of the rear wheel, an imbalance of the scooter in the right-left direction is reduced. However, since the rear suspension is arranged at a position close to the rear wheel in the vehicle width direction and a distance from the rear wheel, which corresponds to a fulcrum, to the rear suspension in the vehicle width direction is short, the imbalance in the right-left direction is not significantly reduced.

It is an object of the present invention to provide a straddled vehicle able to maintain a capacity of a storage box arranged under a seat and to reduce an imbalance in the right-left direction. According to the present invention said object is solved by a straddled vehicle having the features of independent claim 1. Preferred embodiments are laid down in the dependent claims.

A preferred embodiment provides a straddled vehicle including a rear wheel, a body frame, a seat on which a rider sits, a storage box arranged under the seat and closed and opened by the seat, a swing unit including an engine and a transmission mechanism at least partially arranged further to the left than the rear wheel and arranged to transmit power of the engine to the rear wheel, the swing unit vertically swingable with respect to the body frame and supporting the rear wheel, a rear arm including a front portion fixed to the engine and a rear portion supporting the rear wheel together with the transmission mechanism, the rear arm being arranged further to the right than the rear wheel and vertically swingable together with the rear wheel and the swing unit with respect to the body frame, and a only one rear suspension arranged further to the right than the rear wheel and attached to the body frame and the rear arm, in which a rear end of the only one rear suspension is arranged further to the front than a rotation center of the rear wheel, the rear arm includes at least one fixed portion fixed to the engine, and a suspension attached portion to which the only one rear suspension is attached, and at least a portion of the suspension attached portion is arranged further outward than the at least one fixed portion in the vehicle width direction.

According to this configuration, the entire rear suspension is arranged further to the front than the rotation center of the rear wheel. In other words, any portion of the rear suspension is arranged further to the front than the rotation center of the rear wheel. Thus, the shape and/or size of a vehicle rear portion (a rear portion of the straddled vehicle; the same applies below) is less likely to be limited by the rear suspension. The storage box closed and opened by the seat is arranged in the vehicle rear portion. Thus, it is possible to maintain a capacity of the storage box.

On the other hand, the rear wheel is arranged between the swing unit and the rear arm in the vehicle width direction. At least a portion of the transmission mechanism of the swing unit is arranged further to the left than the rear wheel and the rear suspension is arranged further to the right than the rear wheel. Since the transmission mechanism and the rear suspension are arranged on the opposite sides with respect to the rear wheels, respectively, an imbalance of the straddled vehicle in the right-left direction is reduced.

The imbalance of the straddled vehicle in the right-left direction, that is, the difference between a force to incline the straddled vehicle to the right and a force to incline the straddled vehicle to the left is reduced by decreasing a weight difference between the left side and the right side. The imbalance in the right-left direction is also reduced by changing a distance from the vehicle center in the vehicle width direction. This is because even if the weight of a part of the straddled vehicle is the same, when a distance from the vehicle center to this part in the vehicle width direction changes, a force with which this part inclines the straddled vehicle to the right or left changes.

The rear arm is arranged on the side opposite to the transmission mechanism with respect to the rear wheel. At least a portion of the suspension attached portion of the rear arm is arranged further outward than the at least one fixed portion of the rear arm in the vehicle width direction. Thus, a distance from the vehicle center to the suspension attached portion in the vehicle width direction increases. Further, since the rear arm enlarges in the vehicle width direction, the weight of the rear arm increases. Thus, the imbalance of the straddled vehicle in the right-left direction is further reduced.

As described above, in a case in which a straddled vehicle such as a scooter includes only one rear suspension, normally, the rear suspension is arranged at a position close to the vehicle center. In contrast, the rear suspension according to the preferred embodiment is moved away from the vehicle center in the vehicle width direction. Thus, it is possible to lengthen the distance from the vehicle center to the rear suspension in the vehicle width direction and increase the weight of the rear arm arranged on the side opposite to the transmission mechanism with respect to the rear wheel. As a result, it is possible to effectively reduce the imbalance of the straddled vehicle in the right-left direction.

In the preferred embodiment, at least one of the following features may be added to the straddled vehicle.

The at least one fixed portion is a plurality of fixed portions each fixed to the engine, and at least a portion of the suspension attached portion is arranged further outward than any of the plurality of fixed portions in the vehicle width direction.

According to this configuration, the plurality of fixed portions are provided in the rear arm and each of the fixed portions is fixed to the engine. At least a portion of the suspension attached portion of the rear arm is arranged further outward than any of the plurality of fixed portions in the vehicle width direction. Thus, the distance from the vehicle center to the suspension attached portion in the vehicle width direction increases and the weight of the rear arm increases. As a result, it is possible to further reduce the imbalance of the straddled vehicle in the right-left direction.

The at least one fixed portion includes an upper fixed portion fixed to the engine, and a lower fixed portion fixed to the engine and arranged below the upper fixed portion, and the suspension attached portion is arranged below the upper fixed portion.

According to this configuration, the upper fixed portion and the lower fixed portion of the rear arm are fixed to the engine. The lower fixed portion of the rear arm is arranged below the upper fixed portion of the rear arm. The suspension attached portion of the rear arm is also arranged below the upper fixed portion of the rear arm. Thus, as compared to a case in which the suspension attached portion is arranged above the upper fixed portion, the position of the suspension attached portion goes down.

When the position of the suspension attached portion goes down, the entire rear suspension goes down, or the rear suspension lengthens in its axial direction. In the former case, since the upper end of the rear suspension goes down, it is possible to further relax restrictions on the shape and/or size due to the rear suspension. In the latter case, since an ability of the rear suspension to absorb vibration increases, it is possible to further reduce vibration transmitted to the rider.

The suspension attached portion is arranged above the lower fixed portion.

According to this configuration, the upper fixed portion of the rear arm is arranged above the suspension attached portion of the rear arm and the lower fixed portion of the rear arm is arranged below the suspension attached portion of the rear arm. Thus, a distance from the upper fixed portion to the lower fixed portion in the up-down direction increases and the rear arm enlarges in the up-down direction. Accordingly, since the weight of the rear arm increase, it is possible to further reduce the imbalance of the straddled vehicle in the right-left direction.

The rear suspension overlaps the at least one fixed portion of the only one rear arm in a vehicle side view.

According to this configuration, the rear suspension overlaps the at least one fixed portion of the rear arm in a vehicle side view. At least a portion of the rear suspension is arranged outward of the fixed portion in the vehicle width direction. Thus, the rear suspension moves away from the rear wheel in the vehicle width direction and the distance from the vehicle center to the rear suspension in the vehicle width direction increases. As a result, it is possible to further reduce the imbalance of the straddled vehicle in the right-left direction.

The straddled vehicle further includes an exhaust pipe that guides exhaust gas emitted from the engine and a silencer that emits the exhaust gas guided by the exhaust pipe from an exhaust port opened to the atmosphere, the suspension attached portion is arranged further outward than an inner end of the silencer in the vehicle width direction in a vehicle plan view.

According to this configuration, the suspension attached portion of the rear arm is arranged further outward than the inner end of the silencer in the vehicle width direction in a vehicle plan view. Thus, as compared to a case in which the suspension attached portion is arranged further inward than the inner end of the silencer in the vehicle width direction in a vehicle plan view, the suspension attached portion moves away from the rear wheel in the vehicle width direction and the distance from the vehicle center to the suspension attached portion in the vehicle width direction increases. As a result, it is possible to further reduce the imbalance of the straddled vehicle in the right-left direction.

The straddled vehicle further includes an exhaust pipe that guides exhaust gas emitted from the engine and a silencer that emits the exhaust gas guided by the exhaust pipe from an exhaust port opened to the atmosphere, the rear suspension is arranged over the exhaust pipe and overlaps at least a portion of the exhaust pipe in a vehicle plan view, and an outer end of the exhaust pipe is arranged further outward than the rear suspension in the vehicle width direction in a vehicle plan view.

According to this configuration, the rear suspension is arranged over the exhaust pipe and overlaps at least a portion of the exhaust pipe in a vehicle plan view. In other words, the outer end of the rear suspension is moved outward in the vehicle width direction to a position in which the rear suspension overlaps the exhaust pipe in a vehicle plan view. Thus, it is possible to move away the outer end of the rear suspension from the rear wheel in the vehicle width direction and to further reduce the imbalance of the straddled vehicle in the right-left direction.

On the other hand, the outer end of the exhaust pipe is arranged further outward than the rear suspension in the vehicle width direction in a vehicle plan view. That is, the outer end of the rear suspension is moved outward in the vehicle width direction within a range in which the outer end of the rear suspension is located further inward than the outer end of the exhaust pipe in the vehicle width direction. Thus, it is possible to further reduce the imbalance of the straddled vehicle in the right-left direction while preventing the maximum width (the maximum value of the width of the straddled vehicle) from increasing.

The rear suspension does not overlap the storage box in a vehicle side view.

According to this configuration, the rear suspension is arranged at a position in which the rear suspension does not overlap the storage box in a vehicle side view. Since the rear suspension does not overlap the storage box in a vehicle side view, when the width of the storage box is increased, the storage box does not come into contact with the rear suspension. Thus, it is possible to increase the width of the storage box without being limited by the rear suspension.
a rear end of the body frame is arranged at a position further to the front than the rotation center of the rear wheel.

According to this configuration, the body frame has a reduced size in the front-rear direction and the rear end of the body frame is arranged at a position further to the front than the rotation center of the rear wheel. Since the rear end of the body frame is thus moved forward, the structure of the vehicle rear portion is less likely to be limited not only by the rear suspension but also by the body frame. It is therefore possible to further increase the degree of design freedom in the vehicle rear portion.

The straddled vehicle includes a steering handle to be operated by the rider and a steering shaft arranged to rotate together with the steering handle, the body frame includes a head pipe in which the steering shaft is inserted, and the rear end of the body frame is arranged below a lower end of the head pipe in a vehicle side view.

According to this configuration, the rear end of the body frame has a lowered position and the rear end of the body frame is arranged below the lower end of the head pipe in a vehicle side view. If the rear end of the body frame has a raised position, the seat and/or the carrier bed accordingly have a raised position. If the rear end of the body frame has a lowered position, the height of the seat and/or the carrier bed is less likely to be limited by the rear end of the body frame. It is therefore possible to increase the degree of design freedom in the vehicle rear portion.

The rear end of the body frame is arranged further to the front than the suspension attached portion.

According to this configuration, the body frame is downsized in the front-rear direction and the rear end of the body frame is arranged further to the front than the suspension attached portion of the rear arm. In this way, since the rear end of the body frame is moved forward, the structure of the vehicle rear portion is less likely to be limited not only by the rear suspension but also by the body frame. It is therefore possible to further increase the degree of design freedom in the vehicle rear portion.

At least a portion of the suspension attached portion is arranged behind the rear end of the body frame in a vehicle plan view.

According to this configuration, at least a portion of the suspension attached portion is arranged behind the rear end of the body frame in a vehicle plan view. In other words, at least a portion of the suspension attached portion and the rear end of the body frame are arranged in the front-rear direction. At least a portion of the suspension attached portion and the rear end of the body frame are arranged on a horizontal straight line perpendicular to the vehicle width direction in a vehicle plan view.

Although it is possible to reduce the imbalance of the straddled vehicle in the right-left direction by increasing the distance from the vehicle center to the suspension attached portion in the vehicle width direction, if this distance is too long, the maximum width increases. It is possible to further reduce the imbalance of the straddled vehicle in the right-left direction while preventing the maximum width from increasing by arranging at least a portion of the suspension attached portion right behind the rear end of the body frame in a vehicle plan view.

The rear suspension includes an upper mount bracket linked to the body frame and a lower mount bracket arranged further to the rear than the upper mount bracket and linked to the suspension attached portion of the rear arm, the upper mount bracket is arranged above a rotation axis of a crank shaft of the engine in a vehicle side view, and at least a portion of the lower mount bracket is arranged below the rotation axis of the crank shaft in a vehicle side view.

According to this configuration, the upper mount bracket of the rear suspension is arranged above the rotation axis of the crank shaft in a vehicle side view and the lower mount bracket of the rear suspension is entirely or partially arranged below the rotation axis of the crank shaft in a vehicle side view. In this way, since the position of the rear suspension is lowered, it is possible to lengthen the rear suspension in its axial direction without changing the position of the upper end of the rear suspension. Alternatively, it is possible to lower the position of the upper end of the rear suspension.

The rear suspension includes an upper mount bracket linked to the body frame and a lower mount bracket arranged further to the rear than the upper mount bracket and linked to the suspension attached portion of the rear arm, at least a portion of the upper mount bracket is arranged further to the rear than a rotation axis of a crank shaft of the engine in a vehicle side view.

According to this configuration, the entire rear suspension is arranged further to the front than the rotation center of the rear wheel, while at least a portion of the upper mount bracket of the rear suspension is arranged further to the rear than the rotation axis of the crank shaft in a vehicle side view. Thus, an inclination angle of the rear suspension with respect to the horizontal plane increases. As a result, it is possible to effectively reduce the vibration of the body frame in the up-down direction.

### Advantageous Effects of Invention

According to the present invention, it is possible to provide a straddled vehicle able to maintain a capacity of a storage box arranged under a seat and to reduce an imbalance in the right-left direction.

### BRIEF DESCRIPTION OF THE DRAWINGS

FIG. 1 is a left side view of a straddled vehicle according to a preferred embodiment of the present invention.
FIG. 2 is a left side view of the straddled vehicle with an exterior cover, a seat, and a storage box detached.
FIG. 3 is a plan view of the straddled vehicle with the exterior cover, the seat, and the storage box detached.
FIG. 4 is a right side view of the straddled vehicle with the exterior cover, the seat, and the storage box detached.
FIG. 5 is a cross-sectional view showing the interior of a swing unit.
FIG. 6A is a schematic view of an anti-vibration link when viewed upward.
FIG. 6B is a cross-sectional view of the anti-vibration link taken along the section line VIB-VIB shown in FIG. 6A.
FIG. 6C is a cross-sectional view of the anti-vibration link taken along the section line VIC-VIC shown in FIG. 6A.
FIG. 7 is a right side view of a vehicle rear portion with the exterior cover, the seat, and the storage box detached.
FIG. 8 is a plan view of the vehicle rear portion with the exterior cover, the seat, and the storage box detached.
FIG. 9 is a right side view of the vehicle rear portion in which, in addition to the exterior cover, the seat, and the storage box, a rear suspension and an exhaust system are detached.
FIG. 10 is a plan view showing a rear wheel, a transmission mechanism, a rear arm, and the rear suspension.
FIG. 11 is a plan view showing the rear wheel, the rear arm, and the rear suspension.
FIG. 12 is a right side view of the vehicle rear portion with the exterior cover, the seat, and the storage box detached.
FIG. 13 is a plan view of the vehicle rear portion in which, in addition to the exterior cover, the seat, and the storage box, an air cleaner box is detached.
FIG. 14 is a cross-sectional view showing the interior of the rear suspension.
FIG. 15 is a cross-sectional view showing the interior of a hydraulic damper provided at the rear suspension.
FIG. 16 is a schematic view showing a rear of a conventional straddled vehicle in which a rear suspension is arranged further the right than a rear wheel.
FIG. 17 is a schematic view showing a rear of the straddled vehicle according to the preferred embodiment of the present invention.

### DETAILED DESCRIPTION OF THE PREFERRED EMBODIMENTS

Hereinafter, the preferred embodiments of the present invention will be described in detail referring to the attached drawings.

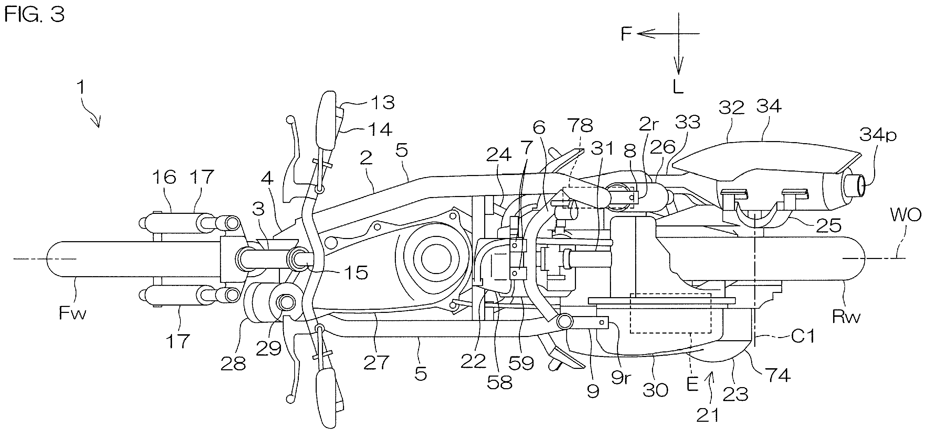

A straddled vehicle 1 in a reference posture placed on a horizontal road surface Rs will be hereinafter described unless specific notice is given. The reference posture is a posture in which a steering handle 14 is disposed at a straight-traveling position (a position of the steering handle 14 shown in FIG. 3) at which the straddled vehicle 1 travels straight and a rotational center C1 of a rear wheel Rw is horizontal.

Front-rear, up-down, and right-left directions in the following description are defined based on the straddled vehicle 1 in the reference posture. The right-left direction corresponds to a vehicle width direction. A vehicle center WO corresponds to a vertical plane that passes through a center line of a head pipe 3 and that is perpendicular to the rotational center C1 of the rear wheel Rw. A plan view, a side view, and a rear view in the following description mean a plan view, a side view, and a rear view of the straddled vehicle 1, respectively unless specific notice is given. The term "upper end" in the following description means an uppermost portion of a member. That is, the term "upper end" means an uppermost end. The same applies to the lower end, front end, rear end, right end, left end, outer end, and inner end.

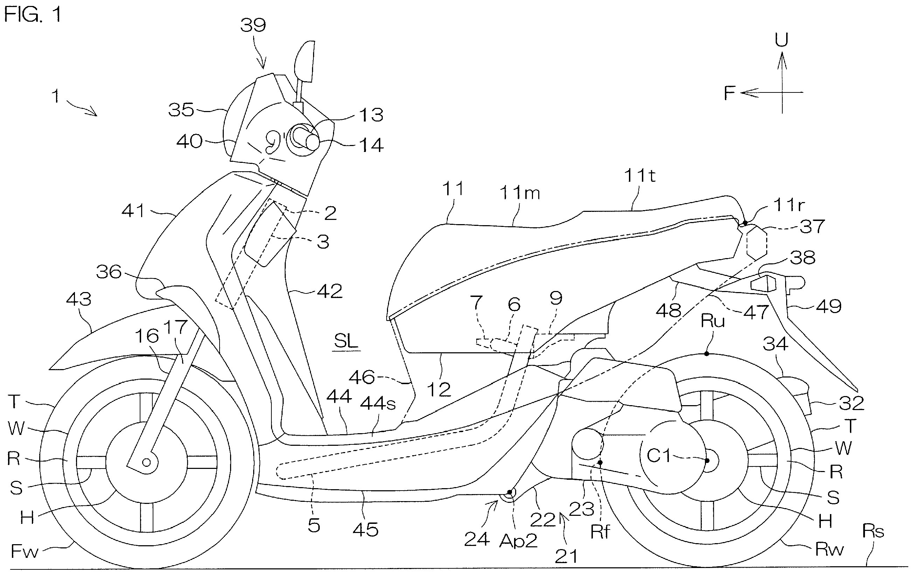

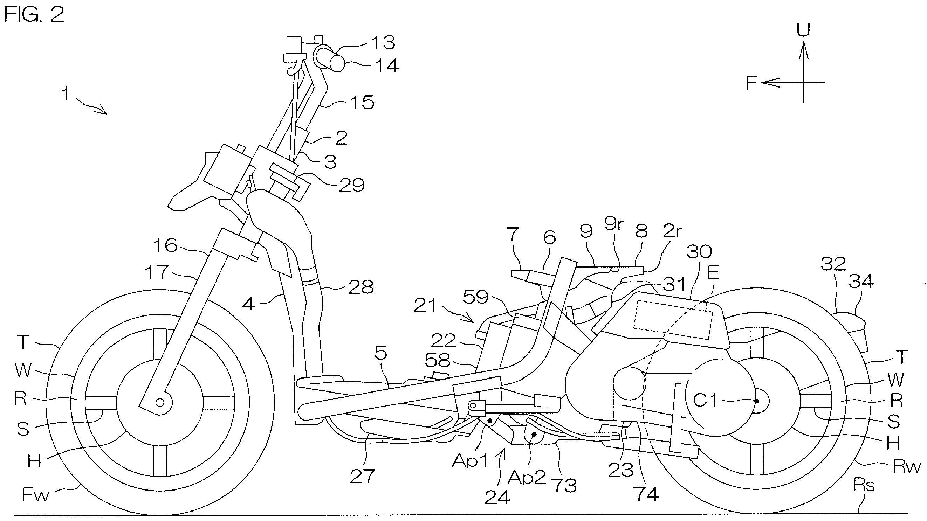

FIG. 1 is a left side view of the straddled vehicle 1 according to a preferred embodiment of the present invention. FIG. 2, FIG. 3, and FIG. 4 are, respectively, a left side view, a plan view, and a right side view of the straddled vehicle 1 with an exterior cover 39, a seat 11, and a storage box 12 detached. The arrows U and F in FIG. 1 indicate the upward direction and the forward direction of the straddled vehicle 1, respectively. The arrow L in FIG. 2 indicate the left direction of the straddled vehicle 1. The same applies to the other drawings.

As shown in FIG. 1, the straddled vehicle 1 is a scooter, for example. The straddled vehicle 1 includes the body frame 2 covered with the exterior cover 39. The body frame 2 includes a head pipe 3 extending obliquely rearward and upward. As shown in FIG. 2, the body frame 2 further includes a down frame 4 extending obliquely rearward and downward from the head pipe 3 and a pair of lower frames 5 extending obliquely rearward and upward from the down frame 4. The down frame 4 and the lower frames 5 are hollow metal members, for example. The front end of the pair of lower frames 5 is arranged below the head pipe 3. The pair of lower frames 5 overlap each other in a side view.

As shown in FIG. 1, the straddled vehicle 1 includes a straddled seat 11 for a rider and a storage box 12 arranged under the seat 11. FIG. 1 shows an example in which the seat 11 incudes a main seat 11m for the rider and a tandem seat 11t for a fellow passenger. The seat 11 may be single-seated. The seat 11 and the storage box 12 are arranged behind the head pipe 3. An opening provided at an upper end portion of the storage box 12 is opened and closed by the seat 11. FIG. 1 shows a state where the seat 11 is arranged in a closed position where the opening of the storage box 12 is closed by the seat 11.

The seat 11 is linked to the body frame 2 via the storage box 12. As shown in FIG. 3, the body frame 2 includes a cross member 6 extending from the right lower frame 5 to the left lower frame 5, a pair of front stays 7 extending forward from the cross member 6, and a pair of rear stays (right rear stay 8 and left rear stay 9) extending rearward from the pair of lower frames 5. The storage box 12 is fixed detachably to the front stays 7, the right rear stay 8, and the left rear stay 9 using bolts.

The front stays 7 are arranged at a position further to the front than the right rear stay 8 and the left rear stay 9. The gap between the pair of front stays 7 in the vehicle width direction is narrower than the gap between the right rear stay 8 and the left rear stay 9 in the vehicle width direction. The front stays 7 are arranged further inward than the right rear stay 8 and the left rear stay 9 in the vehicle width direction. The front stays 7 are arranged in front of the rear wheel Rw in a plan view. The right rear stay 8 and the left rear stay 9 are arranged further outward than the rear wheel Rw in the vehicle width direction.

The right rear stay 8 and the left rear stay 9 are both made of metal, for example. The right rear stay 8 extends rearward from the right lower frame 5 and the left rear stay 9 extends rearward from the left lower frame 5. The rear end 2r of the right rear stay 8 is arranged at a position further to the rear than the rear end 9r of the left rear stay 9. The rear end 2r of the right rear stay 8 corresponds to the rear end 2r of the body frame 2, which is at the rearmost position of the body frame 2. The rear end 2r of the body frame 2 is arranged at a position further to the front than the rotation center C1 of the rear wheel Rw. In contrast, the rear end 11r of the seat 11 is arranged at a position further to the rear than the rotation center C1 of the rear wheel Rw.

As shown in FIG. 2, a steering device 13 to steer the straddled vehicle 1 includes a steering handle 14 to be operated by the rider and a front fork 16 rotatably supporting a front wheel Fw. The front fork 16 as an example of a front wheel support member includes a pair of fork pipes 17 arranged to the right and left of the front wheel Fw and a steering shaft 15 inserted in the head pipe 3. The front wheel Fw includes a rubber tire T that rolls on a road surface Rs and a metal wheel W encircled by the tire T. The wheel W includes an annular rim R encircled by the tire T, an annular hub H encircled by the rim R, and spokes S extending from the hub H to the rim R. The rear wheel Rw also includes the tire T and the wheel W.

The steering shaft 15 protrudes upward from an upper end portion of the head pipe 3. The steering handle 14 is linked to an upper end portion of the steering shaft 15. The steering handle 14 is arranged over the head pipe 3. When the steering handle 14 is operated, the front wheel Fw rotates leftward and rightward about the center line of the head pipe 3 together with the steering handle 14 and the front fork 16. The straddled vehicle 1 is thus steered.

The straddled vehicle 1 includes a swing unit 21 vertically swingable with respect to the body frame 2. The swing unit 21 is an example of a power unit to drive the straddled vehicle 1. The swing unit 21 includes an engine 22 that generates power to rotate the rear wheel Rw and a transmission mechanism 23 that transmits the power of the engine 22 to the rear wheel Rw. The transmission mechanism 23 extends rearward from the engine 22. The rear wheel Rw is supported rotatably by the transmission mechanism 23. The engine 22 is attached to the body frame 2 via an anti-vibration link 24. The rear wheel Rw and the swing unit 21 are vertically swingable with respect to the body frame 2 about horizontal pivot axes Ap1 and Ap2 that pass through the anti-vibration link 24 in the vehicle width direction.

As shown in FIG. 3, the rear wheel Rw is arranged to the right of the swing unit 21. The straddled vehicle 1 includes a rear arm 25 arranged to the right of the rear wheel Rw and a rear suspension 26 that absorbs the vibration of the swing unit 21. The rear wheel Rw is arranged between the swing unit 21 and the rear arm 25 in the vehicle width direction. The rear wheel Rw is supported rotatably by the swing unit 21 and the rear arm 25.

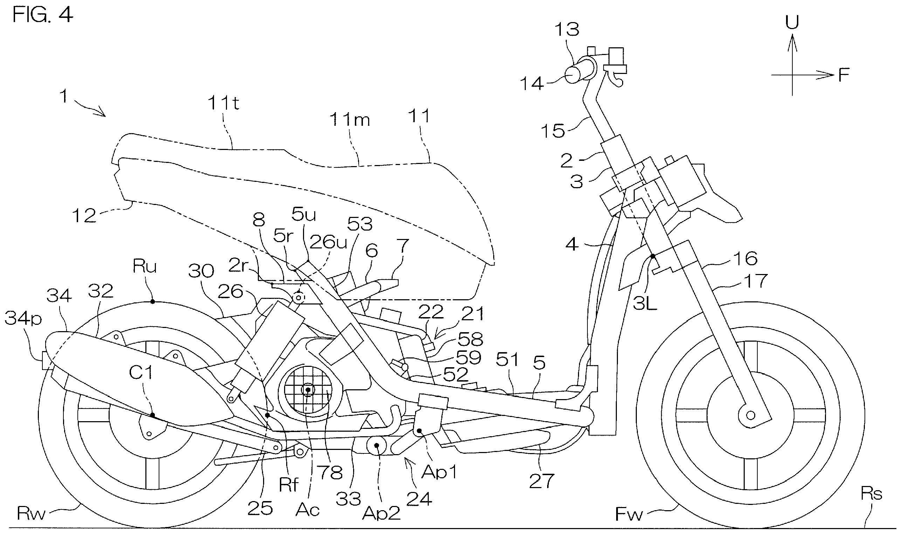

As shown in FIG. 4, an upper end portion of the rear suspension 26 is attached to the body frame 2 and a lower end portion of the rear suspension 26 is attached to the swing unit 21 via the rear arm 25. The rear suspension 26 is arranged further to the right than the rear wheel Rw. The rear suspension 26 is therefore arranged on the side opposite to the transmission mechanism 23 with respect to the rear wheel Rw.

The number of rear suspensions 26 included in the straddled vehicle 1 is one. In other words, only the single rear suspension 26 is provided for the straddled vehicle 1. The rear suspension 26 overlaps the rear wheel Rw in a side view. The rear suspension 26 is entirely arranged at a position further to the front than the rotation center C1 of the rear wheel Rw. The rear suspension 26 is arranged under the storage box 12 in a side view. No portion of the rear suspension 26 overlaps the storage box 12 in a side view.

As shown in FIG. 2, the straddled vehicle 1 includes a fuel tank 27 that stores fuel to be supplied to the engine 22. The fuel tank 27 is attached to the body frame 2. The fuel tank 27 is arranged under a foot board 44 (refer to FIG. 1) described below. The fuel tank 27 may be arranged at a position other than the space under the foot board 44. The fuel tank 27 is arranged between the pair of lower frames 5 in the vehicle width direction. The fuel tank 27 is arranged in front of the engine 22 in a plan view. A filler cap 29 to open and close the fuel inlet is arranged outward of the head pipe 3 in the vehicle width direction. Fuel that has flowed through the fuel inlet is guided into the fuel tank 27 by a fuel piping 28 extending upward from the fuel tank 27.

As shown in FIG. 3, the straddled vehicle 1 includes an air cleaner box 30 housing therein an element E arranged to remove foreign matter from air to be supplied to the engine 22 and an intake pipe 31 arranged to guide air from the air cleaner box 30 to the engine 22. The straddled vehicle 1 further includes an exhaust system 32 arranged to emit exhaust gas generated in the engine 22 to the atmosphere. The exhaust system 32 includes an exhaust pipe 33 arranged to guide exhaust gas emitted from the engine 22 downstream and a silencer 34 arranged to emit exhaust gas guided by the exhaust pipe 33 from an exhaust port 34p opened to the atmosphere.

The air cleaner box 30 is arranged over the transmission mechanism 23. The engine 22 is arranged in front of the air cleaner box 30 in a plan view. The intake pipe 31 extends forward from the air cleaner box 30. As shown in FIG. 4, the exhaust pipe 33 extends rearward from the engine 22. The silencer 34 extends rearward from the exhaust pipe 33. The exhaust pipe 33 and the silencer 34 are arranged to the right of the rear arm 25 and overlap the rear arm 25 in a side view. A front end portion of the exhaust pipe 33 is attached to the engine 22. The silencer 34 is attached to the rear arm 25. The exhaust system 32 is vertically swingable with respect to the body frame 2 together with the rear wheel Rw and the swing unit 21.

As shown in FIG. 1, the straddled vehicle 1 includes a head lamp 35 arranged to emit light forward and two front flashers 36 arranged to flash in response to an operation by the rider. The straddled vehicle 1 further includes a tail lamp 37 arranged to emit light rearward and two rear flashers 38 arranged to flash in response to an operation by the rider. The head lamp 35 and the front flashers 36 are arranged at positions further to the front than the seat 11. The tail lamp 37 and the rear flashers 38 are arranged at positions further to the rear than the front end Rf of the rear wheel Rw.

The exterior cover 39 of the straddled vehicle 1 includes a handle cover 40 arranged in front of and behind the steering handle 14, a front cover 41 arranged in front of the head pipe 3, and a leg shield 42 arranged behind the head pipe 3. The leg shield 42 is arranged between the head pipe 3 and the seat 11 in the front-rear direction. A front fender 43 of the exterior cover 39 is arranged over the front wheel Fw. The front fender 43 is arranged to rotate leftward and rightward together with the front wheel Fw. The handle cover 40 is arranged to rotate leftward and rightward together with the steering handle 14.

The exterior cover 39 includes the foot board 44 arranged over the pair of lower frames 5, a pair of under-side covers 45 arranged, respectively, to the right and left of the pair of lower frames 5, and a lower cover 46 arranged below the seat 11. The lower cover 46 is arranged behind the leg shield 42. The exterior cover 39 forms a leg space SL between the leg shield 42 and the lower cover 46 in the front-rear direction in which the feet and legs of the rider on the seat 11 are placed.

The feet of the rider on the seat 11 are placed on a flat surface 44s provided on the upper surface of the foot board 44. The flat surface 44s extends from the right end of the straddled vehicle 1 to the left end of the straddled vehicle 1 in the vehicle width direction. The flat surface 44s may be an absolutely flat surface without concavo-convex or may be a substantially flat surface provided with recessed portions or convex portions that cannot affect placing feet thereon (e.g., recessed portions or convex portions of 1 to 2 cm or so). When the feet of the rider on the seat 11 are placed on the flat surface 44s, the legs of the rider are placed behind the leg shield 42.

The exterior cover 39 includes a pair of rear side covers 47 arranged, respectively, to the right and left of the storage box 12 and a rear fender 49 arranged over and behind the rear wheel Rw. The rear fender 49 is supported by the storage box 12 via a stay 48 extending rearward from the storage box 12. The rear fender 49 extends downward from the stay 48. The two rear flashers 38 are attached to the rear fender 49. The tail lamp 37 is attached to the body frame 2 via the storage box 12. The tail lamp 37 is arranged behind the storage box 12.

As shown in FIG. 4, the lower frames 5 each include a front frame 51 arranged below the foot board 44 (refer to FIG. 1), a rear frame 53 arranged below the seat 11 (refer to FIG. 1), and a corner frame 52 extending from the front frame 51 to the rear frame 53. The front frame 51 extends obliquely upward and rearward from the down frame 4, and the rear frame 53 extends obliquely upward and rearward from the corner frame 52.

The rear frame 53 overlaps the engine 22 in a side view. The rear frame 53 is arranged in front of the rear suspension 26 in a side view. The rear suspension 26 extends obliquely downward and rearward from the right rear stay 8 fixed to the rear frame 53. The rear frame 53 is inclined rearward in a side view, while the rear suspension 26 is inclined forward in a side view. The rear frame 53 and the rear suspension 26 are spaced apart from each other in the front-rear direction. A cooling fan 78 described below is arranged between the rear frame 53 and the rear suspension 26 in the front-rear direction.

The exhaust pipe 33 is arranged below the rear frame 53 and the rear suspension 26 in a side view. A front end portion of the exhaust pipe 33 is arranged under the engine 22 in a side view. A rear end portion of the exhaust pipe 33 is arranged under the rear suspension 26 in a side view. The cooling fan 78 is arranged over the exhaust pipe 33 in a side view. The cooling fan 78 is arranged within a triangular space surrounded by the rear frame 53, the rear suspension 26, and the exhaust pipe 33 in a side view.

The upper end of the rear frame 53 corresponds to the upper ends 5u of the lower frames 5. The rear end of the rear frame 53 corresponds to the rear ends 5r of the lower frames 5. The right rear stay 8 extends rearward from the rear frame 53. The rear end 2r of the right rear stay 8 is arranged at a position further to the rear than the rear ends 5r of the lower frames 5. The rear end 2r of the right rear stay 8 corresponds to the rear end 2r of the body frame 2. The rear end 2r of the body frame 2 is arranged below the rear ends 5r of the lower frames 5.

The upper ends 5u of the lower frames 5 are arranged at positions lower than the lower end 3L of the head pipe 3. The upper ends 5u of the lower frames 5 are arranged at positions higher than a cylinder 57 described below. The upper ends 5u of the lower frames 5 are arranged at positions higher than a rotation axis Ac of a crank shaft 55 described below. The rear ends 5r of the lower frames 5 are arranged at positions further to the rear than the rotation axis Ac of the crank shaft 55. The rear ends 5r of the lower frames 5 are arranged at positions higher than the upper end 26u of the rear suspension 26. The rear ends 5r of the lower frames 5 are arranged at positions higher than the upper end Ru of the rear wheel Rw. The rear ends 5r of the lower frames 5 are arranged at positions further to the front than the front end Rf of the rear wheel Rw.

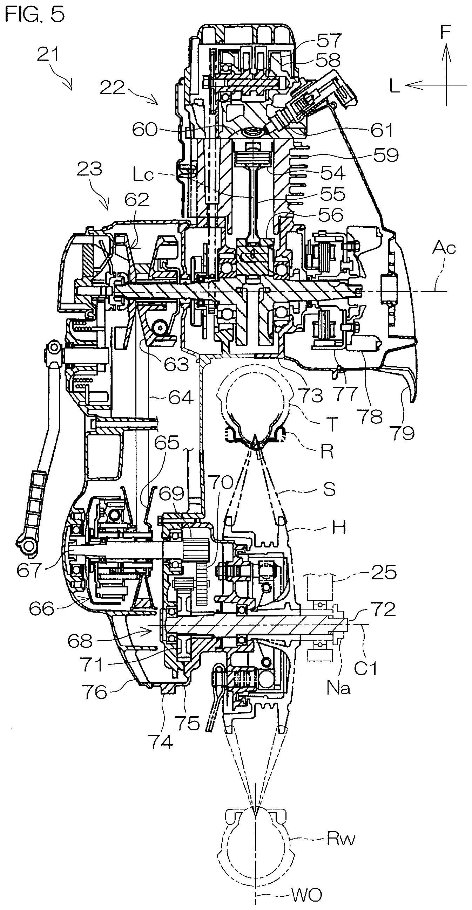

The rear end 2r of the body frame 2 is arranged below the lower end 3L of the head pipe 3. The rear end 2r of the body frame 2 is arranged above the cylinder 57 (refer to FIG. 5). The rear end 2r of the body frame 2 is arranged above the rotation axis Ac of the crank shaft 55. The rear end 2r of the body frame 2 is arranged at a position further to the rear than the rotation axis Ac of the crank shaft 55. The rear end 2r of the body frame 2 is arranged above the upper end Ru of the rear wheel Rw. The rear end 2r of the body frame 2 is arranged at a position further to the front than the rotation center C1 of the rear wheel Rw. The rear end 2r of the body frame 2 is arranged above the upper end 26u of the rear suspension 26.

Next, the swing unit 21 will be described.

FIG. 5 is a cross-sectional view showing the interior of the swing unit 21.

The engine 22 includes a piston 54 arranged to reciprocate in accordance with the combustion of fuel, the cylinder 57 housing the piston 54 therein, a crank shaft 55 arranged to rotate in accordance with the reciprocation of the piston 54, and a connecting rod 56 connecting the piston 54 and the crank shaft 55. FIG. 5 shows an example in which the center line Lc of the cylinder 57 extends in the front-rear direction in a plan view, while the rotation axis Ac of the crank shaft 55 extends in the right-left direction in a plan view. The directions of the center line Lc of the cylinder 57 and the rotation axis Ac of the crank shaft 55 are not limited thereto.

The cylinder 57 includes a cylinder body 59 housing the piston 54 therein and a cylinder head 58 forming a combustion chamber 60 in which an air-fuel mixture is combusted together with the piston 54 and the cylinder body 59. The engine 22 includes a spark plug 61 arranged to ignite the air-fuel mixture within the combustion chamber 60, an intake valve arranged to open and close an intake port that is open at the inner surface of the combustion chamber 60, and an exhaust valve arranged to open and close an exhaust port that is open at the inner surface of the combustion chamber 60. Air is supplied via the intake port into the combustion chamber 60 and exhaust gas is emitted from the combustion chamber 60 via the exhaust port.

The transmission mechanism 23 includes a belt-driven CVT 62 (Continuously Variable Transmission) arranged to transmit rotation toward the rear wheel Rw while continuously changing the speed of the rotation transmitted from the engine 22. The CVT 62 includes a driving pulley 63 arranged to rotate together with the crank shaft 55, a driven pulley 65 arranged behind the driving pulley 63, an endless belt 64 wound around the driving pulley 63 and the driven pulley 65, and a secondary shaft 67 linked to the driven pulley 65 via a centrifugal clutch 66. The rotation of the crank shaft 55 is transmitted to the driven pulley 65 while the speed of the rotation is varied continuously by the driving pulley 63, the endless belt 64, and the driven pulley 65. This causes the rotation of the crank shaft 55 to be transmitted to the secondary shaft 67.

The transmission mechanism 23 further includes reduction gears 68 arranged to transmit rotation toward the rear wheel Rw while reducing the speed of the rotation transmitted from the CVT 62. The reduction gears 68 include a driving gear 69 arranged to rotate together with the secondary shaft 67, a counter gear 70 engaged with the driving gear 69, and a driven gear 71 engaged with the counter gear 70. The rotation of the secondary shaft 67 is transmitted via the driving gear 69 and the counter gear 70 to the driven gear 71. An axle 72 extending in the vehicle width direction is inserted in the driven gear 71 so as to rotate together with the driven gear 71. The axle 72 penetrates the hub H of the rear wheel Rw in the vehicle width direction and fixed to the wheel W of the rear wheel Rw with an axle nut Na. This causes the rotation of the crank shaft 55 to be transmitted to the rear wheel Rw.

The engine 22 includes a crank case 73 housing the crank shaft 55 therein. The transmission mechanism 23 includes a CVT case 74 housing the CVT 62 therein. The centrifugal clutch 66 and the reduction gears 68 are also housed in the CVT case 74. The CVT case 74 includes a main case 75 arranged to the left of the crank case 73 and a side case 76 arranged to the left of the main case 75. The main case 75 and the side case 76 house the CVT 62 therein. The crank case 73 extends rightward from the main case 75. The cylinder body 59 extends forward from the crank case 73.

The axle 72 protrudes from the main case 75 of the CVT case 74 in the vehicle width direction. Both end portions of the axle 72 are supported by the rear arm 25 and the CVT case 74. The rear arm 25 is arranged to the right of the rear wheel Rw. The CVT case 74 is arranged to the left of the rear wheel Rw. The rear wheel Rw is arranged between the rear arm 25 and the CVT case 74 in the vehicle width direction. The rear wheel Rw is supported by the rear arm 25 and the CVT case 74 via the axle 72.

The swing unit 21 includes a generator 77 (e.g., flywheel magneto) arranged to generate electric power in accordance with the rotation of the crank shaft 55, the cooling fan 78 arranged to rotate together with the crank shaft 55, and a shroud 79 housing the generator 77 and the cooling fan 78 therein. The generator 77, the cooling fan 78, and the shroud 79 are arranged on the side opposite to the transmission mechanism 23 with respect to the crank case 73. The generator 77 and the cooling fan 78 are arranged between the crank case 73 and the shroud 79 in the vehicle width direction. The cooling fan 78 is arranged outward of the generator 77 in the vehicle width direction. The generator 77 and the cooling fan 78 surround the crank shaft 55.

Next, the anti-vibration link 24 will be described.

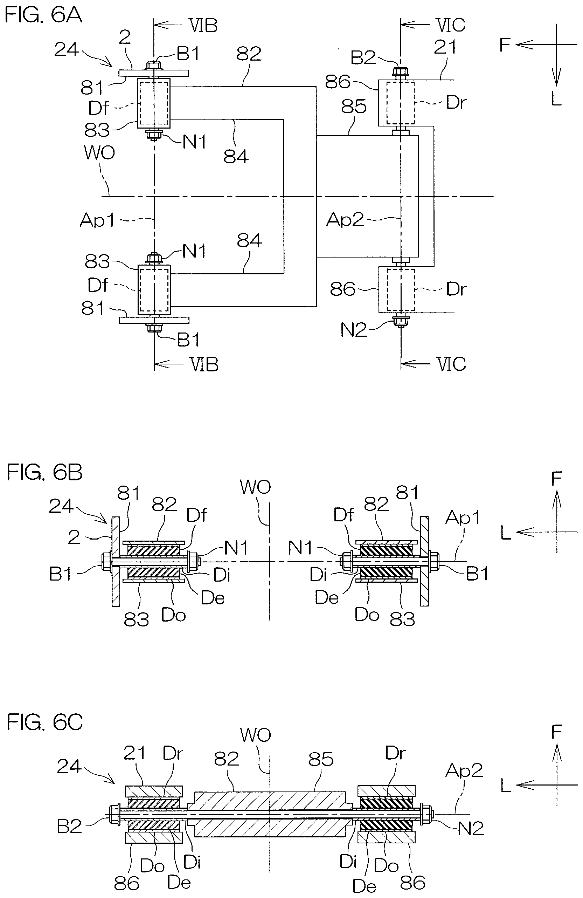

FIG. 6A is a schematic view of the anti-vibration link 24 when viewed upward. FIG. 6B is a cross-sectional view of the anti-vibration link 24 taken along the section line VIB-VIB shown in FIG. 6A. FIG. 6C is a cross-sectional view showing the cross section of the anti-vibration link 24 taken along the section line VIC-VIC shown in FIG. 6A.

As shown in FIG. 6A, the anti-vibration link 24 includes a link member 82 interposed between the body frame 2 and the swing unit 21 and at least one damper unit arranged to absorb the vibration of the swing unit 21. FIG. 6A shows an example in which the anti-vibration link 24 is provided with a pair of front damper units Df interposed between the body frame 2 and the link member 82 and a pair of rear damper units Dr interposed between the link member 82 and the swing unit 21. The link member 82 is linked to the body frame 2 via the pair of front damper units Df and linked to the swing unit 21 via the pair of rear damper units Dr.

The swing unit 21 is swingable with respect to the body frame 2 about a front pivot axis Ap1 extending in the vehicle width direction and swingable with respect to the body frame 2 about a rear pivot axis Ap2 extending in the vehicle width direction. The pair of front damper units Df are arranged on the front pivot axis Ap1. The pair of rear damper units Dr are arranged on the rear pivot axis Ap2. The front pivot axis Ap1 is arranged at a position further to the front than the rear pivot axis Ap2. The front pivot axis Ap1 is arranged above the rear pivot axis Ap2. The front pivot axis Ap1 and the rear pivot axis Ap2 are arranged at positions further to the front than the rotation axis Ac of the crank shaft 55 (refer to FIG. 4). The front pivot axis Ap1 and the rear pivot axis Ap2 are arranged at positions lower than the rotation axis Ac of the crank shaft 55.

The pair of front damper units Df are held on the link member 82. The pair of rear damper units Dr are held on the swing unit 21. The link member 82 includes a pair of front holder portions 83 holding the pair of front damper units Df. The swing unit 21 includes a pair of rear holder portions 86 holding the pair of rear damper units Dr. The pair of front damper units Df may be held on the body frame 2. The pair of rear damper units Dr may be held on the link member 82.

In addition to the pair of front holder portions 83, the link member 82 includes a base portion 85 arranged between the pair of rear holder portions 86 in the vehicle width direction and an arm portion 84 extending from the base portion 85 to the pair of front holder portions 83. The pair of front holder portions 83 of the link member 82 are arranged between a pair of lower stays 81 provided on the body frame 2. The pair of lower stays 81 extend downward, respectively, from the pair of lower frames 5 (refer to FIG. 4). The lower stays 81 are fixed to the lower frames 5.

As shown in FIG. 6B, the front damper units Df each include a cylindrical elastic body De made of rubber or resin, an inner tube Di encircled by the elastic body De, and an outer tube Do encircling the elastic body De. Other damper units such as the rear damper units Dr (an upper damper unit Du and a lower damper unit DL described below) also include an elastic body De, an inner tube Di, and an outer tube Do. The outer peripheral surface of the inner tube Di is coupled to the inner peripheral surface of the elastic body De by adhesion, etc., and the inner peripheral surface of the outer tube Do is coupled to the outer peripheral surface of the elastic body De by adhesion, etc. When a force is applied for relative rotation of the inner tube Di and the outer tube Do, the elastic body De undergoes elastic deformation and thus the inner tube Di and the outer tube Do rotate relatively.

The outer tube Do of the front damper unit Df is inserted in and fixed to the front holder portion 83. The front damper units Df are arranged inward of the lower stays 81 in the vehicle width direction. A bolt B1 penetrates the lower stay 81 in the vehicle width direction and is inserted in the inner tube Di of the front damper unit Df. A nut N1 is arranged inward of the front damper unit Df in the vehicle width direction and is threaded on the bolt B1. The inner tube Di of the front damper unit Df is sandwiched between the bolt B1 and the nut N1 in the vehicle width direction. This causes the inner tube Di of the front damper unit Df to be fixed to the lower stay 81.

As shown in FIG. 6C, the outer tube Do of the rear damper unit Dr is inserted in and fixed to the rear holder portion 86. A bolt B2 penetrates the pair of rear damper units Dr and the base portion 85 of the link member 82 in the vehicle width direction. A nut N2 is threaded on the bolt B2. The inner tubes Di of the pair of rear damper units Dr are sandwiched between the bolt B2 and the nut N2 in the vehicle width direction. The base portion 85 of the link member 82 is sandwiched between the inner tubes Di of the pair of rear damper units Dr in the vehicle width direction. This causes the base portion 85 of the link member 82 to be fixed to the inner tubes Di of the pair of rear damper units Dr.

Next, the air cleaner box 30 and the rear arm 25 will be described.

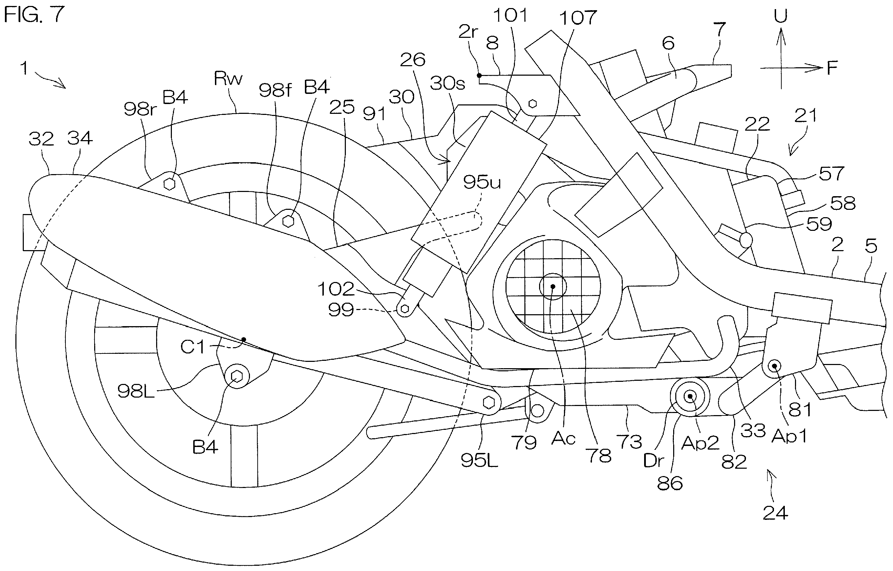

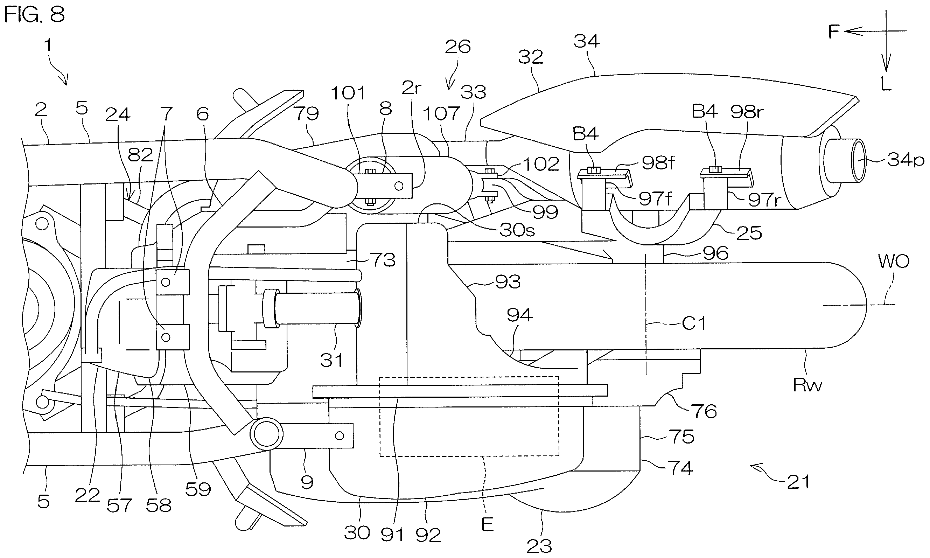

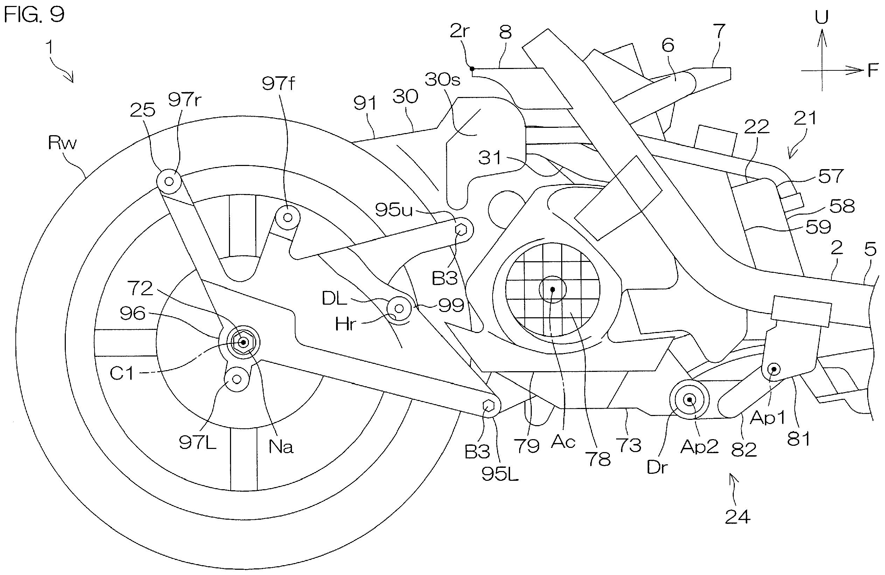

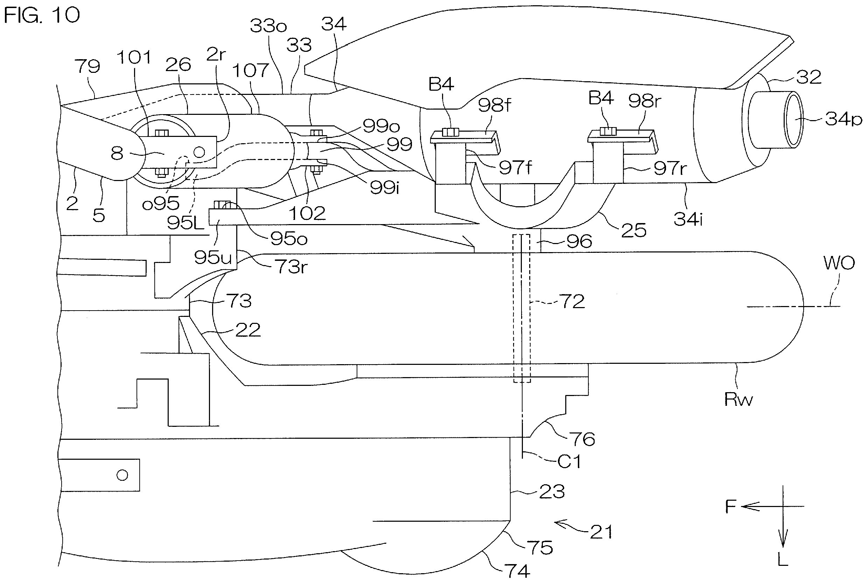

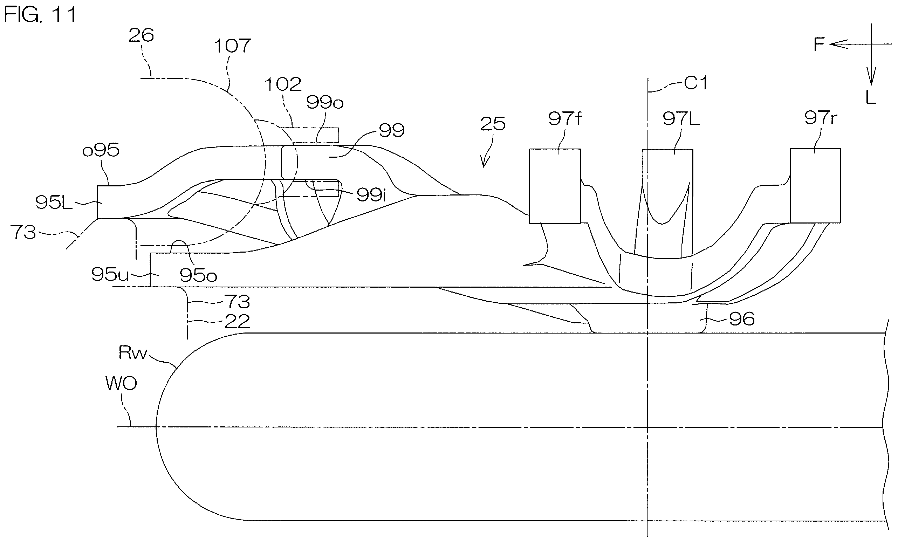

FIG. 7 is a right side view of a rear portion of the straddled vehicle 1 with the exterior cover 39, the seat 11, and the storage box 12 detached. FIG. 8 is a plan view of a rear portion of the straddled vehicle 1 with the exterior cover 39, the seat 11, and the storage box 12 detached. FIG. 9 is a right side view of a rear portion of the straddled vehicle 1 in which, in addition to the exterior cover 39, the seat 11, and the storage box 12, the rear suspension 26 and the exhaust system 32 are detached. FIG. 10 is a plan view showing the rear wheel Rw, the transmission mechanism 23, the rear arm 25, and the rear suspension 26. FIG. 11 is a plan view showing the rear wheel Rw, the rear arm 25, and the rear suspension 26.

As shown in FIG. 8, the air cleaner box 30 includes a center box 91 and a side box 92 arranged in the vehicle width direction. The center box 91 and the side box 92 house the element E therein. The center box 91 and the side box 92 are arranged at positions further to the front than the rotation center C1 of the rear wheel Rw. The side box 92 is arranged to the left of the center box 91. The side box 92 is arranged over the CVT case 74 and overlaps the CVT case 74 in a plan view.

The center box 91 is arranged behind the cylinder 57 in a plan view. The intake pipe 31 extends forward from the center box 91. The center box 91 is arranged over the CVT case 74 and the rear wheel Rw and overlaps the CVT case 74 and the rear wheel Rw in a plan view. Further, the center box 91 is arranged over the crank case 73 and overlaps the crank case 73 in a plan view.

The air cleaner box 30 includes a front portion 93 arranged in front of the rear wheel Rw and a side portion 94 arranged laterally to the rear wheel Rw. The front portion 93 and the side portion 94 are portions of the center box 91. The side portion 94 is arranged outward of the rear wheel Rw in the vehicle width direction. The side portion 94 is arranged between the rear wheel Rw and the side box 92 in the vehicle width direction. The front portion 93 extends rightward from the side portion 94.

The side surface of the front portion 93 corresponds to the side surface 30s of the air cleaner box 30. The side surface 30s of the air cleaner box 30 is arranged further to the right than the rear wheel Rw. As shown in FIG. 7, the rear suspension 26 is arranged to the right of the air cleaner box 30 and overlaps the side surface 30s of the air cleaner box 30 in a side view.

As shown in FIG. 9, the rear arm 25 extends rearward from the engine 22. The rear arm 25 is fixed detachably to the engine 22. The axle 72 is supported by the rear arm 25. The rear arm 25 includes at least one fixed portion fixed to the engine 22 and an axle support portion 96 supporting the axle 72. FIG. 9 shows an example in which the rear arm 25 is provided with two fixed portions (upper fixed portion 95u and lower fixed portion 95L) and each of the fixed portions is fixed to the crank case 73. The at least one fixed portion may be fixed to a part of the engine 22 other than the crank case 73.

The upper fixed portion 95u and the lower fixed portion 95L are fixed to the crank case 73 using two bolts B3. The upper fixed portion 95u and the lower fixed portion 95L are arranged at positions further to the rear than the rotation axis Ac of the crank shaft 55. The upper fixed portion 95u and the lower fixed portion 95L are arranged at positions further to the front than the rotation center C1 of the rear wheel Rw. The upper fixed portion 95u is arranged above the rotation axis Ac of the crank shaft 55 and the rotation center C1 of the rear wheel Rw. The lower fixed portion 95L is arranged below the rotation axis Ac of the crank shaft 55 and the rotation center C1 of the rear wheel Rw. The upper fixed portion 95u is arranged below the upper end Ru of the rear wheel Rw.

The axle support portion 96 is arranged at a position further to the rear than the upper fixed portion 95u and the lower fixed portion 95L. The axle support portion 96 is arranged to the right of the rear wheel Rw. The axle 72 is inserted in a through hole penetrating the axle support portion 96 in the right-left direction. The axle 72 is supported by the axle support portion 96 via a bearing arranged between the axle 72 and the axle support portion 96. As shown in FIG. 8, the axle support portion 96 is arranged between the rear wheel Rw and the silencer 34 in the vehicle width direction.

As shown in FIG. 7, the rear suspension 26 overlaps the at least one fixed portion in a side view. FIG. 7 shows an example in which the rear suspension 26 overlaps the upper fixed portion 95u in a side view and is arranged outward of the upper fixed portion 95u in the vehicle width direction. The rear suspension 26 may overlap both of the upper fixed portion 95u and the lower fixed portion 95L in a side view, or may overlap only the lower fixed portion 95L in a side view.

The silencer 34 is attached to the rear arm 25. Similarly, the rear suspension 26 is attached to the rear arm 25. The rear arm 25 includes at least one silencer attached portion to which the silencer 34 is attached and a suspension attached portion 99 to which the rear suspension 26 is attached. FIG. 9 shows an example in which the rear arm 25 is provided with three silencer attached portions (front silencer attached portion 97f, rear silencer attached portion 97r, and lower silencer attached portion 97L).

As shown in FIG. 8, a front bracket 98f of the silencer 34 is laid on the side surface of the front silencer attached portion 97f of the rear arm 25. A bolt B4 to fix the front bracket 98f to the front silencer attached portion 97f is inserted in a through hole penetrating the front bracket 98f and the front silencer attached portion 97f in the right-left direction. The front bracket 98f is sandwiched laterally between the bolt B4 and the front silencer attached portion 97f. This causes the front bracket 98f to be fixed to the front silencer attached portion 97f. Similarly, a rear bracket 98r of the silencer 34 is fixed to the rear silencer attached portion 97r, and a lower bracket 98L of the silencer 34 is fixed to the lower silencer attached portion 97L.

As shown in FIG. 9, the suspension attached portion 99 is arranged at a position further to the rear than all of the fixed portions (upper fixed portion 95u and lower fixed portion 95L). The suspension attached portion 99 is arranged above the rotation axis Ac of the crank shaft 55 and the rotation center C1 of the rear wheel Rw. The suspension attached portion 99 is arranged at a position further to the front than the axle support portion 96. The suspension attached portion 99 is arranged at a position further to the front than all of the silencer attached portions (front silencer attached portion 97f, rear silencer attached portion 97r, and lower silencer attached portion 97L). The lower damper unit DL is held within the suspension attached portion 99. The rear suspension 26 is attached to the suspension attached portion 99 via the lower damper unit DL.

The suspension attached portion 99 is arranged below the upper fixed portion 95u. FIG. 9 shows an example in which the upper end of the suspension attached portion 99 is arranged below the lower end of the upper fixed portion 95u, and the lower end of the suspension attached portion 99 is arranged above the upper end of the lower fixed portion 95L. In this example, the suspension attached portion 99 is arranged above the lower fixed portion 95L. At least a portion of the suspension attached portion 99 may be arranged at a height equal to that of the lower fixed portion 95L, or may be arranged at a height different from that of the lower fixed portion 95L.

As shown in FIG. 10, the outer end 99o of the suspension attached portion 99 is arranged further inward than the outer end 33o of the exhaust pipe 33 in the vehicle width direction in a plan view. The inner end 99i of the suspension attached portion 99 is arranged further outward than the inner end 34i of the silencer 34 in the vehicle width direction in a plan view. The inner end 99i of the suspension attached portion 99 is arranged further outward than the outer end (the right end in FIG. 10) of the axle 72 in the vehicle width direction.

The suspension attached portion 99 is arranged further to the rear than the rear end 2r of the body frame 2. At least a portion of the suspension attached portion 99 is arranged behind the rear end 2r of the body frame 2 in a plan view. In other words, at least a portion of the suspension attached portion 99 and the rear end 2r of the body frame 2 are arranged in the front-rear direction. At least a portion of the suspension attached portion 99 and the rear end 2r of the body frame 2 are arranged on a horizontal straight line perpendicular to the vehicle width direction in a plan view.

As shown in FIG. 11, at least a portion of the suspension attached portion 99 is arranged further outward than the at least one fixed portion in the vehicle width direction. FIG. 11 shows an example in which the inner end 99i of the suspension attached portion 99 is arranged further outward than the outer end 95o of the upper fixed portion 95u and the outer end o95 of the lower fixed portion 95L in the vehicle width direction. As long as the inner end 99i of the suspension attached portion 99 is arranged further outward than the outer end 95o of the upper fixed portion 95u in the vehicle width direction, the inner end 99i of the suspension attached portion 99 may be arranged further inward than the outer end o95 of the lower fixed portion 95L in the vehicle width direction.

Next, the rear suspension 26 will be described.

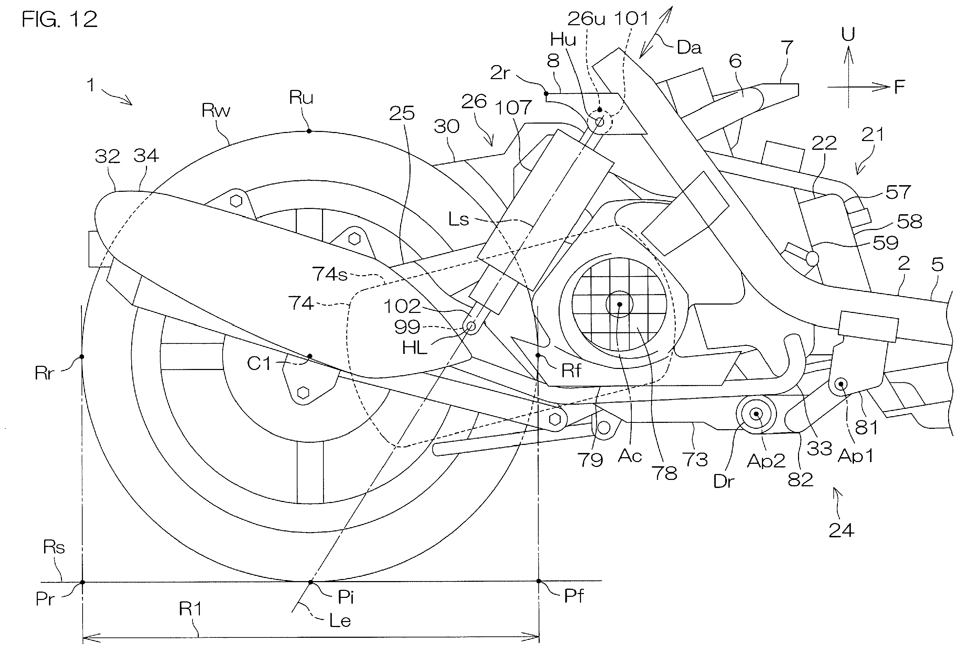

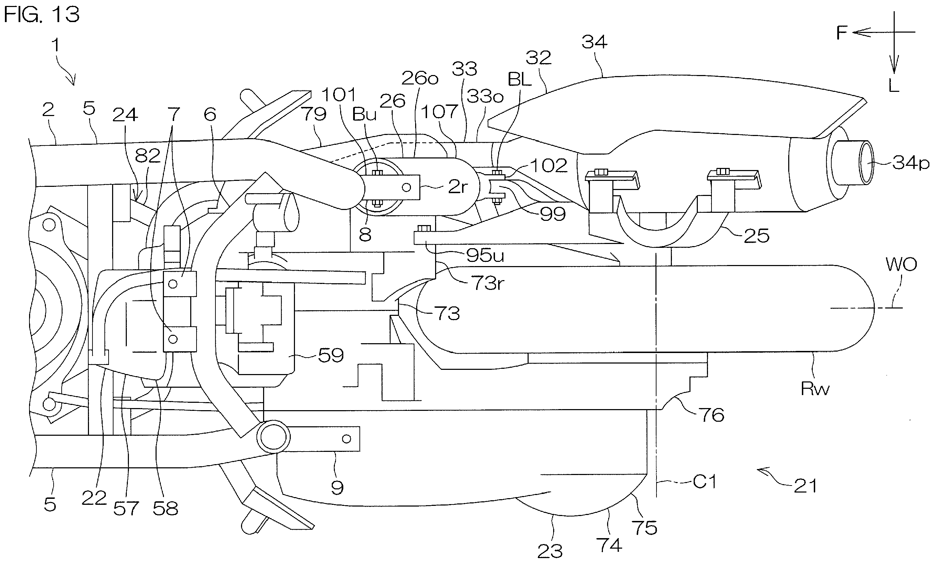

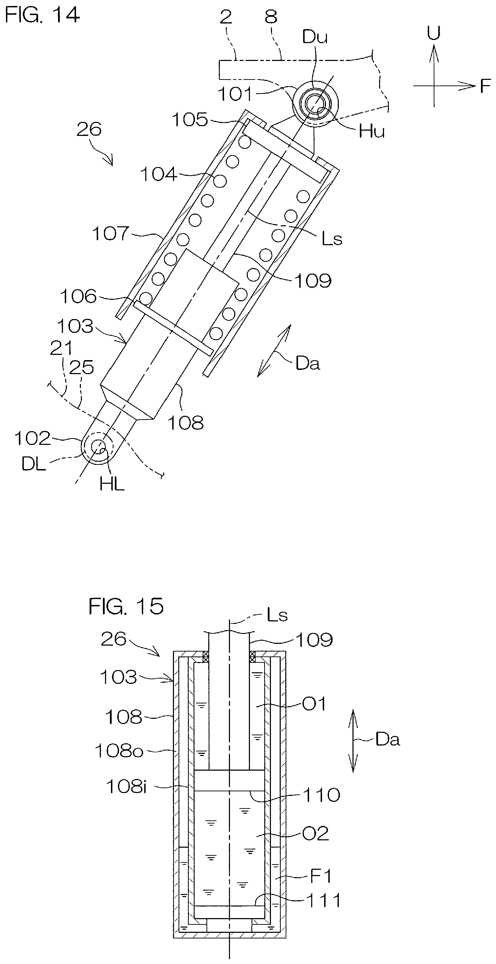

FIG. 12 is a right side view of a rear portion of the straddled vehicle 1 with the exterior cover 39, the seat 11, and the storage box 12 detached. FIG. 13 is a plan view of a rear portion of the straddled vehicle 1 in which, in addition to the exterior cover 39, the seat 11, and the storage box 12, the air cleaner box 30 is detached. FIG. 14 is a cross-sectional view showing the interior of the rear suspension 26. FIG. 15 is a cross-sectional view showing the interior of a hydraulic damper 103 provided at the rear suspension 26. In FIG. 12, illustration of a bolt Bu and a bolt BL (refer to FIG. 13) is omitted.

As shown in FIG. 12 and FIG. 13, the rear suspension 26 includes an upper mount bracket 101 attached to the body frame 2 and a lower mount bracket 102 attached to the swing unit 21 via the rear arm 25. As shown in FIG. 14, the rear suspension 26 includes a hydraulic damper 103 arranged between the upper mount bracket 101 and the lower mount bracket 102. The rear suspension 26 further includes a coil spring 104 surrounding the hydraulic damper 103, an upper stopper 105 and a lower stopper 106 supporting the coil spring 104, and a cylindrical suspension cover 107 surrounding the hydraulic damper 103 and the coil spring 104.

The upper mount bracket 101 is linked to an upper end portion of the hydraulic damper 103. The lower mount bracket 102 is linked to a lower end portion of the hydraulic damper 103. The upper stopper 105 is provided on the upper mount bracket 101. The lower stopper 106 is provided on the hydraulic damper 103. The hydraulic damper 103 is inserted in the coil spring 104. The coil spring 104 is sandwiched between the upper stopper 105 and the lower stopper 106 in an axial direction Da of the hydraulic damper 103.

The hydraulic damper 103 is able to expand and contract in the axial direction Da of the hydraulic damper 103. As shown in FIG. 15, the hydraulic damper 103 includes a cylinder tube 108 housing oil therein, a piston valve 110 arranged to move inside the cylinder tube 108 in the axial direction Da of the hydraulic damper 103, and a piston rod 109 protruding from the cylinder tube 108 in the axial direction Da of the hydraulic damper 103 and arranged to move together with the piston valve 110 in the axial direction Da of the hydraulic damper 103. FIG. 15 shows an example in which the hydraulic damper 103 is a twin-tubed damper and the piston rod 109 protrudes upward from the cylinder tube 108. The hydraulic damper 103 may be a mono-tubed damper. The piston rod 109 may protrude downward from the cylinder tube 108.

As shown in FIG. 15, if the hydraulic damper 103 is a twin-tubed damper, the cylinder tube 108 includes an inner cylinder 108i encircling the piston valve 110 and an outer cylinder 108o encircling the inner cylinder 108i. The interior space of the inner cylinder 108i is partitioned by the piston valve 110 into an oil chamber O1 and an oil chamber O2 that are separated from each other in the axial direction Da of the hydraulic damper 103. A fluid chamber F1 formed between the inner cylinder 108i and the outer cylinder 108o is connected to the oil chamber O2 via a base valve 111. The oil chamber O1 and the oil chamber O2 house oil therein and the fluid chamber F1 houses oil and gas (such as nitrogen gas) therein.

Regardless of whether the hydraulic damper 103 is a single-cylinder or a double-cylinder type, the oil chamber O1, the oil chamber O2, and the fluid chamber F1 each form a closed space isolated from the space outside the cylinder tube 108. The fluid (oil or gas) within the cylinder tube 108 is therefore not able to flow out of the cylinder tube 108. The rear suspension 26 includes no reserve tank (also called sub-tank) that is separate from the hydraulic damper 103 and thus it is possible to downsize the rear suspension 26 and decrease the weight of the rear suspension 26.

As shown in FIG. 14, the upper mount bracket 101 is attached to the body frame 2 via the upper damper unit Du. The bolt Bu (refer to FIG. 13) to fix the upper mount bracket 101 to the body frame 2 is inserted in an upper bolt insertion hole Hu penetrating the upper mount bracket 101 in the vehicle width direction. The upper damper unit Du is inserted in the upper bolt insertion hole Hu and held on the upper mount bracket 101. The upper damper unit Du may be held on the body frame 2. The upper mount bracket 101 is rotatable with respect to the body frame 2 about the center line of the upper bolt insertion hole Hu extending in the vehicle width direction.

The lower mount bracket 102 is attached to the rear arm 25 via the lower damper unit DL. The bolt BL (refer to FIG. 13) to fix the lower mount bracket 102 to the rear arm 25 is inserted in a lower bolt insertion hole HL penetrating the lower mount bracket 102 in the vehicle width direction. The lower damper unit DL is held within a holding hole Hr (refer to FIG. 9) that is provided at the rear arm 25. The lower damper unit DL may be held on the lower mount bracket 102. The lower mount bracket 102 is rotatable with respect to the rear arm 25 about the center line of the lower bolt insertion hole HL extending in the vehicle width direction.

As shown in FIG. 12, the upper mount bracket 101 is arranged above the lower mount bracket 102 in a side view. The upper mount bracket 101 is arranged further to the front than the lower mount bracket 102 in a side view. The upper mount bracket 101 and the lower mount bracket 102 are arranged further to the rear than the rotation axis Ac of the crank shaft 55 in a side view. FIG. 12 shows an example in which the entire upper mount bracket 101 is arranged further to the rear than the rotation axis Ac of the crank shaft 55 in a side view. Only a portion of the upper mount bracket 101 may be arranged further to the rear than the rotation axis Ac of the crank shaft 55 in a side view.

The upper mount bracket 101 is arranged above the rotation axis Ac of the crank shaft 55 in a side view. At least a portion of the lower mount bracket 102 is arranged below the rotation axis Ac of the crank shaft 55 in a side view. The upper mount bracket 101 and the lower mount bracket 102 are arranged at positions further to the rear than the pivot axes Ap1 and Ap2 in a side view. The upper mount bracket 101 and the lower mount bracket 102 are arranged at positions higher than the pivot axes Ap1 and Ap2 in a side view.

The upper mount bracket 101 is arranged above the front end Rf of the rear wheel Rw in a side view. The upper mount bracket 101 is arranged at a position further to the front than the front end Rf of the rear wheel Rw in a side view. The lower mount bracket 102 is arranged at a position further to the rear than the front end Rf of the rear wheel Rw in a side view. The lower mount bracket 102 overlaps the rear wheel Rw in a side view. The upper mount bracket 101 is arranged above the CVT case 74 in a side view. The lower mount bracket 102 overlaps the CVT case 74 in a side view. The lower mount bracket 102 is arranged below the upper surface 74s of the CVT case 74 (refer to FIG. 13) in a side view.

The upper mount bracket 101 is arranged at a position further to the front than the rear end 2r of the body frame 2 in a side view. The lower mount bracket 102 is arranged at a position further to the rear than the rear end 2r of the body frame 2 in a side view. The upper mount bracket 101 and the lower mount bracket 102 are arranged at positions lower than the rear end 2r of the body frame 2 in a side view. The upper mount bracket 101 and the lower mount bracket 102 are arranged at positions lower than the lower end 3L of the head pipe 3 (refer to FIG. 4) in a side view.

As shown in FIG. 13, the upper mount bracket 101 is arranged under the right rear stay 8 and overlaps the right rear stay 8 in a plan view. Similarly, the suspension cover 107 is arranged under the right rear stay 8 and overlaps the right rear stay 8 in a plan view. The rear end 73r of the crank case 73 is arranged at a position further to the rear than the upper mount bracket 101 in a plan view. The lower mount bracket 102 is arranged inward of the exhaust pipe 33 in the vehicle width direction in a plan view. The rear suspension 26 is arranged over the exhaust pipe 33 and overlaps the exhaust pipe 33 in a plan view. The outer end 26o of the rear suspension 26 is arranged further inward than the outer end 33o of the exhaust pipe 33 in the vehicle width direction in a plan view.

As shown in FIG. 12, the upper bolt insertion hole Hu is arranged above the lower bolt insertion hole HL in a side view. The upper bolt insertion hole Hu is arranged at a position further to the front than the lower bolt insertion hole HL in a side view. The upper bolt insertion hole Hu and the lower bolt insertion hole HL are arranged at positions further to the rear than the rotation axis Ac of the crank shaft 55 in a side view. The upper bolt insertion hole Hu is arranged above the rotation axis Ac of the crank shaft 55 in a side view. The lower bolt insertion hole HL is arranged below the rotation axis Ac of the crank shaft 55 in a side view. The upper bolt insertion hole Hu and the lower bolt insertion hole HL are arranged at positions further to the rear than the pivot axes Ap1 and Ap2 in a side view. The upper bolt insertion hole Hu and the lower bolt insertion hole HL are arranged at positions higher than the pivot axes Ap1 and Ap2 in a side view.

The upper bolt insertion hole Hu and the lower bolt insertion hole HL are arranged at positions higher than the rotation center C1 of the rear wheel Rw. The upper bolt insertion hole Hu is arranged at a position further to the front than the front end Rf of the rear wheel Rw in a side view. The lower bolt insertion hole HL is arranged at a position further to the rear than the front end Rf of the rear wheel Rw in a side view. The upper bolt insertion hole Hu is arranged at a position further to the front than the rear end 2r of the body frame 2 in a side view. The lower bolt insertion hole HL is arranged at a position further to the rear than the rear end 2r of the body frame 2 in a side view. The upper bolt insertion hole Hu and the lower bolt insertion hole HL are arranged at positions lower than the rear end 2r of the body frame 2 in a side view. The upper bolt insertion hole Hu and the lower bolt insertion hole HL are arranged at positions lower than the lower end 3L of the head pipe 3 (refer to FIG. 4) in a side view.

As shown in FIG. 14, the center line of the hydraulic damper 103 corresponds to the center line Ls of the rear suspension 26. The center line Ls of the rear suspension 26 is inclined forward. As shown in FIG. 12, a straight line extending from the center line Ls of the rear suspension 26 toward a road surface Rs in a direction of the center line Ls is defined as an extended line Le of the rear suspension 26. The extended line Le of the rear suspension 26 is arranged on the same straight line as the center line Ls of the rear suspension 26. The extended line Le of the rear suspension 26 intersects with the road surface Rs at a position (a position of an intersection Pi) further to the rear than the front end Rf of the rear wheel Rw and further to the front than the rear end Rr of the rear wheel Rw in a side view.

As shown in FIG. 12, a range R1 of the total length of the rear wheel Rw is defined as a range from an intersection Pf between a vertical line passing through the front end Rf of the rear wheel Rw and the road surface Rs in a side view to an intersection Pr between a vertical line passing through the rear end Rr of the rear wheel Rw and the road surface Rs in a side view. The intersection Pi between the extended line Le of the rear suspension 26 and the road surface Rs is positioned within the range R1 of the total length of the rear wheel Rw. That is, the position and the inclination angle of the rear suspension 26 are set such that the intersection Pi is positioned within the range R1 of the total length of the rear wheel Rw. Thus, it is possible to effectively reduce the vibrations of the rear wheel Rw and the swing unit 21 using the anti-vibration link 24 and the rear suspension 26 without providing a balancer to the engine 22.

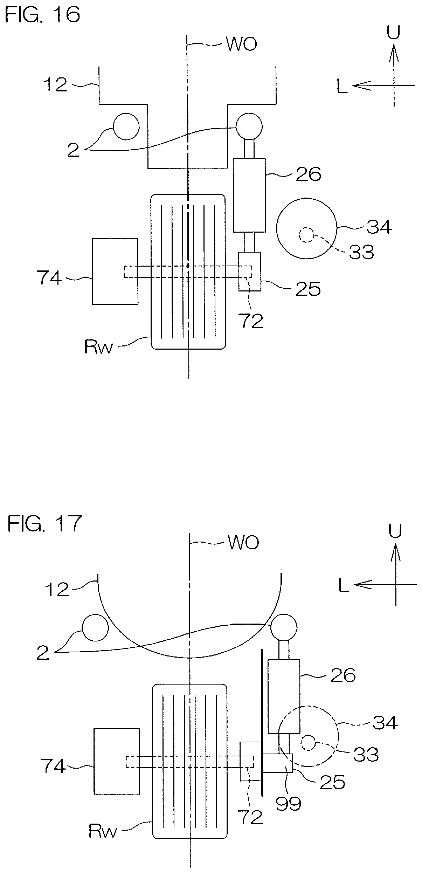

FIG. 16 is a schematic view showing a rear of a conventional straddled vehicle in which a rear suspension is arranged further the right than a rear wheel. In the conventional straddled vehicle shown in FIG. 16, the rear suspension is arranged at a position relatively close to the vehicle center in the vehicle width direction. Specifically, the lower end portion of the rear suspension is arranged right above an axle support portion of a rear arm in a rear view. In such a layout of the rear suspension, the rear portion of a body frame is also arranged at a position relatively close to the vehicle center in the vehicle width direction. Thus, the width of a storage box is limited by the body frame and the rear suspension. Further, since the rear suspension is linked to the rear arm at a position further to the rear than an axle, the width of the storage box is also limited by a silencer.

FIG. 17 is a schematic view showing a rear of the straddled vehicle 1 according to the preferred embodiment of the present invention. In the straddled vehicle 1 shown in FIG. 17, the rear suspension 26 is moved outward in the vehicle width direction in a rear view, as compared to the conventional straddled vehicle shown in FIG. 16. Specifically, the lower end portion of the rear suspension 26 is moved further outward than the axle support portion 96 (refer to FIG. 9) of the rear arm 25 in the vehicle width direction in a rear view. In the example shown in FIG. 17, the suspension attached portion 99, to which the lower end portion of the rear suspension 26 is attached, is arranged further outward in the vehicle width direction than a vertical thick line passing through the outer end of the axle support portion 96. The suspension attached portion 99 is arranged further outward than the upper fixed portion 95u and the lower fixed portion 95L (refer to FIG. 9) of the rear arm 25 in the vehicle width direction.

In the straddled vehicle 1 shown in FIG. 17, the rear suspension 26 is not only arranged further to the right than the rear wheel Rw, but also moved outward in the vehicle width direction. Thus, the rear arm 25, to which the rear suspension 26 is attached, enlarges in the vehicle width direction and the weight of the rear arm 25 increases. Further, the distance from the vehicle center WO to the rear suspension 26 in the vehicle width direction increases. Thus, it is possible to further reduce the imbalance of the straddled vehicle 1 in the right-left direction.

The rear suspension 26 is arranged further to the front than the axle 72. The suspension attached portion 99 is arranged further outward in the vehicle width direction than the innermost end (which corresponds to the inner end 34i shown in FIG. 10) of the silencer 34 . Thus, it is possible to arrange the suspension attached portion 99 outward in the vehicle width direction without being limited by the silencer 34. Further, since the rear suspension 26 is moved forward, the rear suspension 26 does not come into contact with the silencer 34(a large circle drawn by alternate long and two short dashes line in FIG. 17) even when the rear suspension 26 is moved outward in the vehicle width direction. Thus, it is possible to move the rear suspension 26 outward in the vehicle width direction as described above by avoiding the contact between the rear suspension 26and the exhaust pipe 33.

In addition, since the rear suspension 26 moves outward in the vehicle width direction, the upper end portion of the rear suspension 26 moves outward in the vehicle width direction, and the rear portion of the body frame 2, to which the upper end portion of the rear suspension 26 is attached, also moves outward in the vehicle width direction. FIG. 17 shows an example in which a portion of the storage box 12 is arranged between the pair of lower frames 5 of the body frame 2 in a rear view. Since the rear portion of the body frame 2 moves outward in the vehicle width direction, even in the example shown in FIG. 17, it is possible to enlarge the storage box 12 in the vehicle width direction.

Further, in the straddled vehicle 1 shown in FIG. 17, the lower end portion of the rear suspension 26 moves downward as compared to the conventional straddled vehicle shown in FIG. 16. Thus, it is possible to lengthen the rear suspension 26 in its axial direction without changing the position of the upper end of the rear suspension 26. Alternatively, it is possible to lower the position of the upper end of the rear suspension 26. When the rear suspension 26 is lengthened in the axial direction, it is possible to further improve the ride comfort for the rider. When the position of the upper end of the rear suspension 26 is lowered, it is possible to lower the rear portion of the body frame 2 and to mitigate restrictions on the shape, etc. of the storage box 12 due to the body frame 2.

As described above, in the preferred embodiment, the entire rear suspension 26 is arranged further to the front than the rotation center C1 of the rear wheel Rw. In other words, any portion of the rear suspension 26 is arranged further to the front than the rotation center C1 of the rear wheel Rw. Thus, the shape and/or size of a vehicle rear portion (a rear portion of the straddled vehicle 1; the same applies below) is less likely to be limited by the rear suspension 26. The storage box 12 closed and opened by the seat 11 is arranged in the vehicle rear portion. Thus, it is possible to maintain a capacity of the storage box 12.

On the other hand, the rear wheel Rw is arranged between the swing unit 21 and the rear arm 25 in the vehicle width direction. At least a portion of the transmission mechanism 23 of the swing unit 21 is arranged further to the left than the rear wheel Rw and the rear suspension 26 is arranged further to the right than the rear wheel Rw. Since the transmission mechanism 23 and the rear suspension 26 are arranged on the opposite sides with respect to the rear wheel Rw, respectively, an imbalance of the straddled vehicle 1 in the right-left direction is reduced.

The imbalance of the straddled vehicle 1 in the right-left direction, that is, the difference between a force to incline the straddled vehicle 1 to the right and a force to incline the straddled vehicle 1 to the left is reduced by decreasing a weight difference between the left side and the right side. The imbalance in the right-left direction is also reduced by changing a distance from the vehicle center WO in the vehicle width direction. This is because even if the weight of a part of the straddled vehicle 1 is the same, when a distance from the vehicle center WO to this part in the vehicle width direction changes, a force with which this part inclines the straddled vehicle 1 to the right or left changes.

The rear arm 25 is arranged on the side opposite to the transmission mechanism 23 with respect to the rear wheel Rw. At least a portion of the suspension attached portion 99 of the rear arm 25 is arranged further outward than the upper fixed portion 95u and the lower fixed portion 95L of the rear arm 25 in the vehicle width direction. Thus, a distance from the vehicle center WO to the suspension attached portion 99 in the vehicle width direction increases. Further, since the rear arm 25 enlarges in the vehicle width direction, the weight of the rear arm 25 increases. Thus, the imbalance of the straddled vehicle 1 in the right-left direction is further reduced.

As described above, in a case in which a straddled vehicle such as a scooter includes only one rear suspension, normally, the rear suspension is arranged at a position close to the vehicle center. In contrast, the rear suspension 26 according to the preferred embodiment is moved away from the vehicle center WO in the vehicle width direction. Thus, it is possible to lengthen the distance from the vehicle center WO to the rear suspension 26 in the vehicle width direction and increase the weight of the rear arm 25 arranged on the side opposite to the transmission mechanism 23 with respect to the rear wheel Rw. As a result, it is possible to effectively reduce the imbalance of the straddled vehicle 1 in the right-left direction.

In the preferred embodiment, the upper fixed portion 95u and the lower fixed portion 95L of the rear arm 25 are fixed to the engine 22. The lower fixed portion 95L of the rear arm 25 is arranged below the upper fixed portion 95u of the rear arm 25. The suspension attached portion 99 of the rear arm 25 is also arranged below the upper fixed portion 95u of the rear arm 25. Thus, as compared to a case in which the suspension attached portion 99 is arranged above the upper fixed portion 95u, the position of the suspension attached portion 99 goes down.

When the position of the suspension attached portion 99 goes down, the entire rear suspension 26 goes down, or the rear suspension 26 lengthens in its axial direction. In the former case, since the upper end of the rear suspension 26 goes down, it is possible to further relax restrictions on the shape and/or size due to the rear suspension 26. In the latter case, since an ability of the rear suspension 26 to absorb vibration increases, it is possible to further reduce vibration transmitted to the rider.

In the preferred embodiment, the upper fixed portion95u of the rear arm 25 is arranged above the suspension attached portion 99 of the rear arm 25 and the lower fixed portion95L of the rear arm 25 is arranged below the suspension attached portion 99 of the rear arm 25. Thus, a distance from the upper fixed portion95u to the lower fixed portion95L in the up-down direction increases and the rear arm 25 enlarges in the up-down direction. Accordingly, since the weight of the rear arm 25 increase, it is possible to further reduce the imbalance of the straddled vehicle 1 in the right-left direction.

In the preferred embodiment, the rear suspension 26 overlaps the upper fixed portion 95u of the rear arm 25 in a side view. At least a portion of the rear suspension 26 is arranged outward of the upper fixed portion 95u in the vehicle width direction. Thus, the rear suspension 26 moves away from the rear wheel Rw in the vehicle width direction and the distance from the vehicle center WO to the rear suspension 26 in the vehicle width direction increases. As a result, it is possible to further reduce the imbalance of the straddled vehicle 1 in the right-left direction.

In the preferred embodiment, the suspension attached portion 99 of the rear arm 25 is arranged further outward than the inner end 34i of the silencer 34 in the vehicle width direction in a plan view. Thus, as compared to a case in which the suspension attached portion 99 is arranged further inward than the inner end 34i of the silencer 34 in the vehicle width direction in a plan view, the suspension attached portion 99 moves away from the rear wheel Rw in the vehicle width direction and the distance from the vehicle center WO to the suspension attached portion 99 in the vehicle width direction increases. As a result, it is possible to further reduce the imbalance of the straddled vehicle 1 in the right-left direction.

In the preferred embodiment, the rear suspension 26 is arranged over the exhaust pipe 33 and overlaps at least a portion of the exhaust pipe 33 in a plan view. In other words, the outer end 26o of the rear suspension 26 is moved outward in the vehicle width direction to a position in which the rear suspension 26 overlaps the exhaust pipe 33 in a plan view. Thus, it is possible to move away the outer end 26o of the rear suspension 26 from the rear wheel Rw in the vehicle width direction and to further reduce the imbalance of the straddled vehicle 1 in the right-left direction.

On the other hand, the outer end 33o of the exhaust pipe 33 is arranged further outward than the rear suspension 26 in the vehicle width direction in a plan view. That is, the outer end 26o of the rear suspension 26 is moved outward in the vehicle width direction within a range in which the outer end 26o of the rear suspension 26 is located further inward than the outer end 33o of the exhaust pipe 33 in the vehicle width direction. Thus, it is possible to further reduce the imbalance of the straddled vehicle 1 in the right-left direction while preventing the maximum width (the maximum value of the width of the straddled vehicle 1 ) from increasing.

In the preferred embodiment, the rear suspension 26 is arranged at a position in which the rear suspension 26 does not overlap the storage box 12 in a side view. Since the rear suspension 26 does not overlap the storage box 12 in a side view, when the width of the storage box 12 is increased, the storage box 12 does not come into contact with the rear suspension 26. Thus, it is possible to increase the width of the storage box 12 without being limited by the rear suspension 26.

In the preferred embodiment, the body frame 2 has a reduced size in the front-rear direction and the rear end 2r of the body frame 2 is arranged at a position further to the front than the rotation center C1 of the rear wheel Rw. Since the rear end 2r of the body frame 2 is thus moved forward, the structure of the vehicle rear portion is less likely to be limited not only by the rear suspension 26 but also by the body frame 2. It is therefore possible to further increase the degree of design freedom in the vehicle rear portion.

In the preferred embodiment, the rear end 2r of the body frame 2 has a lowered position and the rear end 2r of the body frame 2 is arranged below the lower end 3L of the head pipe 3 in a side view. If the rear end 2r of the body frame 2 has a raised position, the seat 11 and/or the carrier bed accordingly have a raised position. If the rear end 2r of the body frame 2 has a lowered position, the height of the seat 11 and/or the carrier bed is less likely to be limited by the rear end 2r of the body frame 2. It is therefore possible to increase the degree of design freedom in the vehicle rear portion.

In the preferred embodiment, the body frame 2 is downsized in the front-rear direction and the rear end 2r of the body frame 2 is arranged further to the front than the suspension attached portion 99 of the rear arm 25. In this way, since the rear end 2r of the body frame 2 is moved forward, the structure of the vehicle rear portion is less likely to be limited not only by the rear suspension 26 but also by the body frame 2. It is therefore possible to further increase the degree of design freedom in the vehicle rear portion.

In the preferred embodiment, at least a portion of the suspension attached portion 99 is arranged behind the rear end 2r of the body frame 2 in a plan view. In other words, at least a portion of the suspension attached portion 99 and the rear end 2r of the body frame 2 are arranged in the front-rear direction. At least a portion of the suspension attached portion 99 and the rear end 2r of the body frame 2 are arranged on a horizontal straight line perpendicular to the vehicle width direction in a plan view.

Although it is possible to reduce the imbalance of the straddled vehicle 1 in the right-left direction by increasing the distance from the vehicle center WO to the suspension attached portion 99 in the vehicle width direction, if this distance is too long, the maximum width increases. It is possible to further reduce the imbalance of the straddled vehicle 1 in the right-left direction while preventing the maximum width from increasing by arranging at least a portion of the suspension attached portion 99 right behind the rear end 2r of the body frame 2 in a plan view.

In the preferred embodiment, the upper mount bracket 101 of the rear suspension 26 is arranged above the rotation axis Ac of the crank shaft55 in a side view and the lower mount bracket 102 of the rear suspension 26 is entirely or partially arranged below the rotation axis Ac of the crank shaft55 in a side view. In this way, since the position of the rear suspension 26 is lowered, it is possible to lengthen the rear suspension 26 in its axial direction without changing the position of the upper end of the rear suspension 26. Alternatively, it is possible to lower the position of the upper end of the rear suspension 26.

In the preferred embodiment, the entire rear suspension 26 is arranged further to the front than the rotation center C1 of the rear wheel Rw, while at least a portion of the upper mount bracket 101 of the rear suspension 26 is arranged further to the rear than the rotation axis Ac of the crank shaft55 in a side view. Thus, an inclination angle of the rear suspension 26 with respect to the horizontal plane increases. As a result, it is possible to effectively reduce the vibration of the body frame 2 in the up-down direction.

### Other Preferred Embodiments

The present invention is not restricted to the contents of the preferred embodiments described above and various modifications are possible.

For example, the seat 11 may be attached to the body frame 2 via a member other than the storage box 12. Alternatively, the seat 11 may be attached directly to the body frame 2 instead of being attached to the body frame 2 via an intermediate member such as the storage box 12.

The straddled vehicle 1 may further include a carrier bed or a carrier box arranged over the rear wheel Rw. In this case, the carrier bed or the carrier box may be attached to the body frame 2 via an intermediate member such as the storage box 12 or may be attached directly to the body frame 2.

The suspension attached portion 99 of the rear arm 25 may be arranged above both of the upper fixed portion 95u and the lower fixed portion 95L, or may be arranged below both of the upper fixed portion 95u and the lower fixed portion 95L.

The rear suspension 26 may not overlap any of the upper fixed portion 95u and the lower fixed portion 95L in a side view.

The inner end 99i (refer to FIG. 10) of the suspension attached portion 99 of the rear arm 25 may be arranged further inward than the inner end 34i of the silencer 34 in the vehicle width direction in a plan view.

The rear suspension 26 may not overlap the exhaust pipe 33 in a plan view.

The outer end 33o (refer to FIG. 13) of the exhaust pipe 33 may be arranged further inward than the outer end 26o of the rear suspension 26 in the vehicle width direction in a plan view.

The rear suspension 26 may overlap the storage box 12 in a side view.

The rear end 2r of the body frame 2 may be arranged further to the rear than the suspension attached portion 99.
at least a portion of the suspension attached portion 99 of the rear arm 25 may be arranged further outward or inward than the rear end 2r of the body frame 2 in the vehicle width direction in a plan view.

The upper mount bracket 101 of the rear suspension 26 may be arranged below the rotation axis Ac of the crank shaft 55 in a side view.
at least a portion of the upper mount bracket 101 of the rear suspension 26 may be arranged further to the front than the rotation axis Ac of the crank shaft 55 in a side view.

At least a portion of the upper mount bracket 101 of the rear suspension 26 may be arranged above the lower end 3L of the head pipe 3 in a side view.

At least a portion of the upper mount bracket 101 of the rear suspension 26 may be arranged at a position further to the rear than the rear end 73r of the crank case 73.

At least a portion of the lower mount bracket 102 of the rear suspension 26 may be arranged at a position further to the rear than the axle 72 in a side view.

At least a portion of the lower mount bracket 102 of the rear suspension 26 may be arranged at a position further to the front than the front end Rf of the rear wheel Rw in a side view.

The lower mount bracket 102 of the rear suspension 26 may be entirely arranged above the rotation axis Ac of the crank shaft 55 in a side view.

At least a portion of the lower mount bracket 102 of the rear suspension 26 may be arranged above the upper surface 74s of the CVT case 74 in a side view.

The rear suspension 26 may not overlap the rear wheel Rw in a side view. That is, the rear suspension 26 may be entirely arranged at a position further to the front than the front end Rf of the rear wheel Rw in a side view.

The rear end 2r of the body frame 2 may be arranged at a position further to the rear than the rotation center C1 of the rear wheel Rw.

The rear end 2r of the body frame 2 may be arranged above the lower end 3L of the head pipe 3.

The straddled vehicle 1 may be a motorcycle other than a scooter as long as the swing unit 21 is provided for the straddled vehicle 1. The straddled vehicle 1 may also be a vehicle including three or more wheels.

Two or more arrangements among all the arrangements described above may be combined.

Various other design changes are possible within the scope of the matters described in the claims.

### REFERENCE SIGNS LIST

1: straddled vehicle, 2: body frame , 2r: rear end of body frame, 3: head pipe, 3L: lower end of head pipe, 11: seat , 12: storage box , 14: steering handle, 15: steering shaft, 21: swing unit, 22: engine , 23: transmission mechanism , 25: rear arm, 26: rear suspension , 33: exhaust pipe , 34: silencer, 95u: upper fixed portion, 95L: lower fixed portion, 99: suspension attached portion, 101: upper mount bracket, 102: lower mount bracket , Ac: rotation axis of crank shaft , C1: rotation center of rear wheel, Rw: rear wheel

## Claims

1. A straddled vehicle (1) comprising:
a rear wheel (Rw);
a body frame (2);
a seat (11) on which a rider sits;
a storage box (12) arranged under the seat (11) and closed and opened by the seat (11);
a swing unit (21) including an engine (22) and a transmission mechanism (23) at least partially arranged further to the left than the rear wheel (Rw) and arranged to transmit power of the engine (22) to the rear wheel (Rw), the swing unit (21) vertically swingable with respect to the body frame (2) and supporting the rear wheel (Rw);
a rear arm (25) including a front portion fixed to the engine (22) and a rear portion supporting the rear wheel (Rw) together with the transmission mechanism (23), the rear arm (25) being arranged further to the right than the rear wheel (Rw) and
vertically swingable together with the rear wheel (Rw) and the swing unit (21) with respect to the body frame (2); and
an only one rear suspension (26) arranged further to the right than the rear wheel (Rw) and attached to the body frame (2) and the rear arm (25), wherein
a rear end of the only one rear suspension (26) is arranged further to the front than a rotation center (C1) of the rear wheel (Rw),
the rear arm (25) includes at least one fixed portion (95L, 95u) fixed to the engine (22), and a suspension attached portion (99) to which the only one rear suspension (26) is attached, and
at least a portion of the suspension attached portion (99) is arranged further outward than the at least one fixed portion (95L, 95u) in the vehicle width direction.

2. The straddled vehicle (1) according to claim 1, wherein
the at least one fixed portion (95L, 95u) is a plurality of fixed portions (95L, 95u) each fixed to the engine (22), and
at least a portion of the suspension attached portion (99) is arranged further outward than any of the plurality of fixed portions (95L, 95u) in the vehicle width direction.

3. The straddled vehicle (1) according to claim 1 or 2, wherein
the at least one fixed portion (95L, 95u) includes an upper fixed portion (95u) fixed to the engine (22), and a lower fixed portion (95L) fixed to the engine (22) and arranged below the upper fixed portion (95u), and
the suspension attached portion (99) is arranged below the upper fixed portion (95u).

4. The straddled vehicle (1) according to claim 3, wherein the suspension attached portion (99) is arranged above the lower fixed portion (95L).

5. The straddled vehicle (1) according to any one of claims 1 to 4, wherein the only one rear suspension (26) overlaps the at least one fixed portion (95L, 95u) of the rear arm (25) in a vehicle side view.

6. The straddled vehicle (1) according to any one of claims 1 to 5, wherein the straddled vehicle (1) further comprises an exhaust pipe (33) that guides exhaust gas emitted from the engine (22) and a silencer (34) that emits the exhaust gas guided by the exhaust pipe (33) from an exhaust port (34p) opened to the atmosphere,
the suspension attached portion (99) is arranged further outward than an inner end (34i) of the silencer (34) in the vehicle width direction in a vehicle plan view.

7. The straddled vehicle (1) according to any one of claims 1 to 5, wherein the straddled vehicle (1) further comprises an exhaust pipe (33) that guides exhaust gas emitted from the engine (22) and a silencer (34) that emits the exhaust gas guided by the exhaust pipe (33) from an exhaust port (34p) opened to the atmosphere,
the only one rear suspension (26) is arranged over the exhaust pipe (33) and overlaps at least a portion of the exhaust pipe (33) in a vehicle plan view, and
an outer end (33o) of the exhaust pipe (33) is arranged further outward than the only one rear suspension (26) in the vehicle width direction in a vehicle plan view.

8. The straddled vehicle (1) according to any one of claims 1 to 7, wherein the only one rear suspension (26) does not overlap the storage box (12) in a vehicle side view.

9. The straddled vehicle (1) according to any one of claims 1 to 8, wherein a rear end (2r) of the body frame (2) is arranged at a position further to the front than the rotation center (C1) of the rear wheel (Rw).

10. The straddled vehicle (1) according to claim 9, wherein
the straddled vehicle (1) includes a steering handle (14) to be operated by the rider and a steering shaft (15) arranged to rotate together with the steering handle (14), the body frame (2) includes a head pipe (3) in which the steering shaft (15) is inserted, and
the rear end (2r) of the body frame (2) is arranged below a lower end (3L) of the head pipe (3) in a vehicle side view.

11. The straddled vehicle (1) according to any one of claims 1 to 10, wherein the rear end (2r) of the body frame (2) is arranged further to the front than the suspension attached portion (99).

12. The straddled vehicle (1) according to claim 11, wherein at least a portion of the suspension attached portion (99) is arranged behind the rear end (2r) of the body frame (2) in a vehicle plan view.

13. The straddled vehicle (1) according to any one of claims 1 to 12, wherein
the only one rear suspension (26) includes an upper mount bracket (101) linked to the body frame (2) and a lower mount bracket (102) arranged further to the rear than the upper mount bracket (101) and linked to the suspension attached portion (99) of the rear arm (25),
the upper mount bracket (101) is arranged above a rotation axis (Ac) of a crank shaft (55) of the engine (22) in a vehicle side view, and
At least a portion of the lower mount bracket (102) is arranged below the rotation axis (Ac) of the crank shaft (55) in a vehicle side view.

14. The straddled vehicle (1) according to any one of claims 1 to 12, wherein
the only one rear suspension (26) includes an upper mount bracket (101) linked to the body frame (2) and a lower mount bracket (102) arranged further to the rear than the upper mount bracket (101) and linked to the suspension attached portion (99) of the rear arm (25),
at least a portion of the upper mount bracket (101) is arranged further to the rear than a rotation axis (Ac) of a crank shaft (55) of the engine (22) in a vehicle side view.

## Patentansprüche

1. Ein Spreiz-Sitz-Fahrzeug (1), das umfasst:
ein Hinterrad (Rw);
einem Körperrahmen (2);
einen Sitz (11), auf den ein Fahrer sitzt;
eine Staubox (12), die unter dem Sitz (11) angeordnet ist und durch den Sitz (11) geschlossen und geöffnet wird;
eine Schwenkeinheit (21), die einen Motor (22) und einen Getriebemechanismus (23) enthält, der zumindest teilweise weiter links als das Hinterrad (Rw) angeordnet ist und eingerichtet ist, um Leistung des Motors (22) auf das Hinterrad (Rw) zu übertragen, die Schwenkeinheit (21) ist in Bezug auf den Körperrahmen (2) vertikal schwenkbar und lagert das Hinterrad (Rw);
einen hinteren Arm (25), der einen vorderen Abschnitt, der an dem Motor (22) befestigten ist, und einen hinteren Abschnitt, der das Hinterrad (Rw) zusammen mit dem Getriebemechanismus (23) lagert, beinhaltet, der hintere Arm (25) ist weiter rechts als das Hinterrad (Rw) angeordnet und zusammen mit dem Hinterrad (Rw) und der Schwenkeinheit (21) in Bezug auf den Körperrahmen (2) vertikal schwenkbar; und
eine einzige hintere Aufhängung (26), die weiter rechts als das Hinterrad (Rw)
angeordnet und an dem Körperrahmen (2) und dem hinteren Arm (25) angebracht ist, wobei
ein hinteres Ende der einzigen hinteren Aufhängung (26) weiter vorne angeordnet ist als ein Drehzentrum (C1) des Hinterrades (Rw),
der hintere Arm (25) zumindest einen fixierten Abschnitt (95L, 95u), der am Motor (22) fixiert ist, und einen Aufhängungsanbringungsabschnitt (99), an dem die einzige hintere Aufhängung (26) angebracht ist, beinhaltet, und
zumindest ein Abschnitt des Aufhängungsanbringungsabschnitts (99) in Fahrzeugbreitenrichtung weiter außen angeordnet ist als der zumindest eine fixierte Abschnitt (95L, 95u).

2. Das Spreiz-Sitz-Fahrzeug (1) gemäß Anspruch 1, wobei
der mindestens eine fixierte Abschnitt (95L, 95u) eine Mehrzahl von fixierten Abschnitten (95L, 95u) ist, die jeweils an dem Motor (22) fixiert sind, und
zumindest ein Abschnitt des Aufhängungsanbringungsabschnitts (99) in Fahrzeugbreitenrichtung weiter außen angeordnet ist als irgendeiner der Mehrzahl der fixierten Abschnitte (95L, 95u).

3. Das Spreiz-Sitz-Fahrzeug (1) gemäß Anspruch 1 oder 2, wobei
der zumindest eine fixierte Abschnitt (95L, 95u) einen oberen fixierten Abschnitt (95u), der an dem Motor (22) fixiert ist, und einen unteren fixierten Abschnitt (95L), der an dem Motor (22) fixiert ist und unterhalb des oberen fixierten Abschnitts (95u) angeordnet ist, beinhaltet, und
der Aufhängungsanbringungsabschnitt (99) unterhalb des oberen fixierten Abschnitts (95u) angeordnet ist.

4. Das Spreiz-Sitz-Fahrzeug (1) gemäß Anspruch 3, wobei der Aufhängungsanbringungsabschnitt (99) oberhalb des unteren fixierten Abschnitts (95L) angeordnet ist.

5. Das Spreiz-Sitz-Fahrzeug (1) gemäß irgendeinem der Ansprüche 1 bis 4, wobei die einzige hintere Aufhängung (26) den zumindest einen fixierten Abschnitt (95L, 95u) des hinteren Arms (25) in einer Fahrzeugseitenansicht überlappt.

6. Das Spreiz-Sitz-Fahrzeug (1) gemäß irgendeinem der Ansprüche 1 bis 5, wobei das Spreiz-Sitz-Fahrzeug (1) weiterhin eine Abgasleitung (33), die Abgase, die vom dem Motor (22) ausgestoßen sind, leitet, und einen Schalldämpfer (34), der Abgase, die durch die Abgasleitung (33) geleitet sind, von einer Auslassöffnung (34p) zur Atmosphäre ausstößt, aufweist,
der Aufhängungsanbringungsabschnitt (99) in einer Fahrzeugdraufsicht weiter außen angeordnet ist als ein inneres Ende (34i) des Schalldämpfers (34) in Fahrzeugbreitenrichtung.

7. das Spreiz-Sitz-Fahrzeug (1) gemäß irgendeinem der Ansprüche 1 bis 5, wobei das Spreiz-Sitz-Fahrzeug (1) weiterhin eine Abgasleitung (33), die Abgase, die vom dem Motor (22) ausgestoßen sind, leitet, und einen Schalldämpfer (34), der Abgase, die durch die Abgasleitung (33) geleitet sind, von einer Auslassöffnung (34p) zur Atmosphäre ausstößt, aufweist,
die einzige hintere Aufhängung (26) über der Abgasleitung (33) angeordnet ist und in einer Fahrzeugdraufsicht zumindest einen Abschnitt der Abgasleitung (33) überlappt, und
ein äußeres Ende (33o) der Abgasleitung (33) in einer Fahrzeugdraufsicht weiter außen angeordnet ist als die einzige hintere Aufhängung (26) in Fahrzeugbreitenrichtung.

8. Das Spreiz-Sitz-Fahrzeug (1) gemäß irgendeinem der Ansprüche 1 bis 7, wobei die einzige hintere Aufhängung (26) die Staubox (12) in einer Fahrzeugseitenansicht nicht überlappt.

9. Das Spreiz-Sitz-Fahrzeug (1) gemäß irgendeinem der Ansprüche 1 bis 8, wobei ein hinteres Ende (2r) des Körperrahmens (2) an einer Position angeordnet ist, die weiter vorne liegt als das Drehzentrum (C1) des Hinterrades (Rw).

10. Das Spreiz-Sitz-Fahrzeug (1) gemäß Anspruch 9, wobei
das Spreiz-Sitz-Fahrzeug (1) eine Lenkstange (14), die von dem Fahrer zu bedienen ist, und eine Lenkwelle (15), die angeordnet ist, um zusammen mit der Lenkstange (14) zu drehen, beinhaltet,
der Körperrahmen (2) beinhaltet ein Kopfrohr (3), in das die Lenkwelle (15) eingesetzt ist, und
das hintere Ende (2r) des Körperrahmens (2) in einer Fahrzeugseitenansicht ist unterhalb eines unteren Endes (3L) des Kopfrohrs (3) angeordnet.

11. Das Spreiz-Sitz-Fahrzeug (1) gemäß irgendeinem der Ansprüche 1 bis 10, wobei das hintere Ende (2r) des Körperrahmens (2) weiter vorne angeordnet ist als der Aufhängungsanbringungsabschnitt (99).

12. Das Spreiz-Sitz-Fahrzeug (1) gemäß Anspruch 11, wobei zumindest ein Abschnitt des Aufhängungsanbringungsabschnitts (99) in der Fahrzeugdraufsicht hinter dem hinteren Ende (2r) des Körperrahmens (2) angeordnet ist.

13. Das Spreiz-Sitz-Fahrzeug (1) gemäß irgendeinem der Ansprüche 1 bis 12, wobei die einzige hintere Aufhängung (26) eine obere Montagehalterung (101), die mit dem Körperrahmen (2) verbunden ist, und eine untere Montagehalterung (102), die weiter hinten als die obere Montagehalterung (101) angeordnet und mit dem Aufhängungsanbringungsabschnitt (99) des hinteren Arms (25) verbunden ist, beinhaltet,
die obere Montagehalterung (101) ist in einer Fahrzeugseitenansicht über einer Drehachse (Ac) einer Kurbelwelle (55) des Motors (22) angeordnet, und
zumindest ein Abschnitt der unteren Montagehalterung (102) ist in einer Fahrzeugseitenansicht unterhalb der Drehachse (Ac) der Kurbelwelle (55) angeordnet.

14. Das Spreiz-Sitz-Fahrzeug (1) gemäß irgendeinem der Ansprüche 1 bis 12, wobei die einzige hintere Aufhängung (26) eine obere Montagehalterung (101), die mit dem Körperrahmen (2) verbunden ist, und eine untere Montagehalterung (102), die weiter hinten als die obere Montagehalterung (101) angeordnet und mit dem Aufhängungsanbringungsabschnitt (99) des hinteren Arms (25) verbunden ist, beinhaltet,
zumindest ein Abschnitt der oberen Montagehalterung (101) ist weiter hinten angeordnet ist als eine Drehachse (Ac) einer Kurbelwelle (55) des Motors (22) in einer Fahrzeugseitenansicht.

## Revendications

1. Véhicule à enfourcher (1), comprenant :
une roue arrière (Rw) ;
un cadre (2) ;
un siège (11) sur lequel est assis un conducteur ;
un coffre de stockage (12) agencé sous le siège (11) et ouvert et fermé par le siège (11) ;
une unité basculante (21) comprenant un moteur (22) et un mécanisme de transmission (23) agencé au moins partiellement plus à gauche que la roue arrière (Rw) et agencé pour transmettre la puissance du moteur (22) à la roue arrière (Rw), l'unité basculante (21) pouvant basculer verticalement par rapport au cadre (2) et supportant la roue arrière (Rw) ;
un bras arrière (25) comprenant une portion avant fixée au moteur (22) et une portion arrière supportant la roue arrière (Rw) conjointement au mécanisme de transmission (23), le bras arrière (25) étant agencé plus à droite que la roue arrière (Rw) et pouvant basculer verticalement conjointement à la roue arrière (Rw) et à l'unité basculante (21) par rapport au cadre (2) ; et
une suspension arrière unique (26) agencée plus à droite que la roue arrière (Rw) et attachée au cadre (2) et au bras arrière (25), dans lequel
une extrémité arrière de la suspension arrière unique (26) est agencée plus à l'avant qu'un centre de rotation (C1) de la roue arrière (Rw),
le bras arrière (25) comprend au moins une portion fixe (95L, 95u) fixée au moteur (22) et une portion attachée à la suspension (99) à laquelle la suspension arrière unique (26) est attachée, et
au moins une portion de la portion attachée à la suspension (99) est agencée plus à l'extérieur que ladite au moins une portion fixe (95L, 95u) en direction de la largeur du véhicule.

2. Véhicule à enfourcher (1) selon la revendication 1, dans lequel
ladite au moins une portion fixe (95L, 95u) est une pluralité de portions fixes (95L, 95u) fixées chacune au moteur (22), et
au moins une portion de la portion attachée à la suspension (99) est agencée plus à l'extérieur qu'une portion quelconque de la pluralité de portions fixes (95L, 95u) en direction de la largeur du véhicule.

3. Véhicule à enfourcher (1) selon la revendication 1 ou 2, dans lequel
ladite au moins une portion fixe (95L, 95u) comprend une portion fixe supérieure (95u) fixée au moteur (22) et une portion fixe inférieure (95L) fixée au moteur (22) et agencée au-dessous de la portion fixe supérieure (95u), et
la portion attachée à la suspension (99) est agencée au-dessous de la portion fixe supérieure (95u).

4. Véhicule à enfourcher (1) selon la revendication 3, dans lequel la portion attachée à la suspension (99) est agencée au-dessus de la portion fixe inférieure (95L).

5. Véhicule à enfourcher (1) selon l'une quelconque des revendications 1 à 4, dans lequel la suspension arrière unique (26) chevauche ladite au moins une portion fixe (95L, 95u) du bras arrière (25) en vue latérale du véhicule.

6. Véhicule à enfourcher (1) selon l'une quelconque des revendications 1 à 5, dans lequel
le véhicule à enfourcher (1) comprend en outre un tuyau d'échappement (33) qui guide les gaz d'échappement émis par le moteur (22) et un silencieux (34) qui émet les gaz d'échappement guidés par le tuyau d'échappement (33) à partir d'un orifice d'échappement (34p) ouvert sur l'atmosphère,
la portion attachée à la suspension (99) est agencée plus à l'extérieur qu'une extrémité interne (34i) du silencieux (34) en direction de la largeur du véhicule dans une vue en plan du véhicule.

7. Véhicule à enfourcher (1) selon l'une quelconque des revendications 1 à 5, dans lequel
le véhicule à enfourcher (1) comprend en outre un tuyau d'échappement (33) qui guide les gaz d'échappement émis par le moteur (22) et un silencieux (34) qui émet les gaz d'échappement guidés par le tuyau d'échappement (33) à partir d'un orifice d'échappement (34p) ouvert sur l'atmosphère,
la suspension arrière unique (26) est agencée pardessus le tuyau d'échappement (33) et chevauche au moins une portion du tuyau d'échappement (33) dans une vue en plan du véhicule, et
une extrémité externe (33o) du tuyau d'échappement (33) est agencée plus à l'extérieur que la suspension arrière unique (26) en direction de la largeur du véhicule dans une vue en plan du véhicule.

8. Véhicule à enfourcher (1) selon l'une quelconque des revendications 1 à 7, dans lequel ladite suspension arrière unique (26) ne chevauche pas le coffre de stockage (12) en vue latérale du véhicule.

9. Véhicule à enfourcher (1) selon l'une quelconque des revendications 1 à 8, dans lequel une extrémité arrière (2r) du cadre (2) est agencée à une position plus à l'avant que le centre de rotation (C1) de la roue arrière (Rw).

10. Véhicule à enfourcher (1) selon la revendication 9, dans lequel
le véhicule à enfourcher (1) comprend un guidon (14) actionné par le conducteur et un axe de direction (15) agencé pour tourner conjointement avec le guidon (14),
le cadre (2) comprend un tube de tête (3) dans lequel est inséré l'axe de direction (15), et
l'extrémité arrière (2r) du cadre (2) est agencée au-dessous d'une extrémité inférieure (3L) du tube de tête (3) en vue latérale du véhicule.

11. Véhicule à enfourcher (1) selon l'une quelconque des revendications 1 à 10, dans lequel l'extrémité arrière (2r) du cadre (2) est agencée plus à l'avant que la portion attachée à la suspension (99).

12. Véhicule à enfourcher (1) selon la revendication 11, dans lequel au moins une portion de la portion attachée à la suspension (99) est agencée derrière l'extrémité arrière (2r) du cadre (2) dans une vue en plan du véhicule.

13. Véhicule à enfourcher (1) selon l'une quelconque des revendications 1 à 12, dans lequel
la suspension arrière unique (26) comprend un support de montage supérieur (101) relié au cadre (2) et un support de montage inférieur (102) agencé plus à l'arrière que le support de montage supérieur (101) et relié à la portion attachée à la suspension (99) du bras arrière (25),
le support de montage supérieur (101) est agencé au-dessus d'un axe de rotation (Ac) d'un vilebrequin (55) du moteur (22) en vue latérale du véhicule, et
au moins une portion du support de montage inférieur (102) est agencée au-dessous de l'axe de rotation (Ac) du vilebrequin (55) en vue latérale du véhicule.

14. Véhicule à enfourcher (1) selon l'une quelconque des revendications 1 à 12, dans lequel
la suspension arrière unique (26) comprend un support de montage supérieur (101) relié au cadre (2) et un support de montage inférieur (102) agencé plus à l'arrière que le support de montage supérieur (101) et relié à la portion attachée à la suspension (99) du bras arrière (25),
au moins une portion du support de montage supérieur (101) est agencée plus à l'arrière que l'axe de rotation (Ac) du vilebrequin (55) du moteur (22) en vue latérale du véhicule.
